# EUROPEAN PATENT APPLICATION

(11) **EP 2 966 903 A1**
(43) Date of publication of application: **13.01.2016**
(21) Application number: 13879053.0
(22) Date of filing: 22.03.2013
(51) Int. Cl.: H04W 36/08

(54) **METHOD AND APPARATUS FOR CELL IDENTIFICATION**

(71) Applicant: Huawei Technologies Co., Ltd., Longgang District Shenzhen, Guangdong 518129 (CN)
(72) Inventor: ZHANG, Tao, Shenzhen Guangdong 518129 (CN); LIN, Bo, Shenzhen Guangdong 518129 (CN); WANG, Yan, Shenzhen Guangdong 518129 (CN)
(74) Representative: Goddar, Heinz J.
(86) International application number: PCT/CN2013/073068
(87) International publication number: WO 2014/146295

(57) **Abstract**

Embodiments of the present invention provide a cell identification method and apparatus. The cell identification method includes: sending, by a first network node, first information to user equipment and a second network node, where the first information is used to instruct the user equipment and the second network node to perform interaction to determine second information, the second information is used to indicate a to-be-identified cell, and the to-be-identified cell is a cell of the second network node; and receiving, by the first network node, the second information from the user equipment or the second network node, and identifying the to-be-identified cell according to the second information. By applying the foregoing technical solutions, a cell can be accurately identified, power consumption of a second network node can be reduced, and interference to a system can be further reduced.

## Description

### TECHNICAL FIELD

Embodiments of the present invention relate to communications technologies, and in particular, to a cell identification method and apparatus.

### BACKGROUND

In an existing mobile communications network, there may be two different types of network nodes, and these network nodes each may serve one or more cells. Coverage of a macro cell of a macro base station (Marco eNB) is relatively large, and coverage of a cell of a small cell node (Small Cell Node, SCN) is relatively small. Within or near coverage of a macro cell, there may be one or more coverage holes or service hotspot regions, and one or more small cells may be used to compensate for these coverage holes or service hotspot regions, so as to increase system bandwidth.

A cell covered by each network node may have two identifiers, which separately are a physical cell identifier (Physical Cell Identifier, PCI) and a cell global identifier (Cell Global Identifier, CGI). In a network, 504 different PCIs are provided in total; therefore, at most 504 cells can be distinguished by using the PCIs. When a quantity of cells in the network is greater than 504, two or more cells share one PCI; in this case, one cell cannot be uniquely determined by using a PCI. In addition, in the network, 2²⁸ CGIs are provided; therefore, each cell has a CGI different from that of another cell, and one cell can be uniquely determined by using a CGI.

When a quantity of cells within and near coverage of one macro cell is greater than 504, a macro base station cannot uniquely determine these cells according to PCIs, and therefore, cannot perform subsequent communication with communication nodes to which these cells belong, and these cells become to-be-identified cells. This case may be referred to as PCI confusion.

When PCI confusion occurs, a CGI of a to-be-identified cell needs to be reported by using user equipment, so that a first network node can uniquely determine the to-be-identified cell. The user equipment needs to read system information of the to-be-identified cell to obtain the CGI of the to-be-identified cell, which requires that the system information of the to-be-identified cell need to be always be broadcast, and always broadcasting the system information increases power consumption of a node of the to-be-identified cell, and increases interference to a system.

### SUMMARY

Embodiments of the present invention provide a cell identification method and apparatus, which are used to reduce power consumption of a network node and avoid increasing interference to a system because the network node continuously broadcasts system information.

A first aspect of the embodiments of the present invention provides a cell identification method, including:
sending, by a first network node, first information to user equipment and a second network node, where the first information is used to instruct the user equipment and the second network node to perform interaction to determine second information, the second information is used to indicate a to-be-identified cell, and the to-be-identified cell is a cell of the second network node; and
receiving, by the first network node, the second information from the user equipment or the second network node, and identifying the to-be-identified cell according to the second information.

Based on the first aspect, in a first possible implementation manner of the first aspect,
the first information is specifically used to instruct the user equipment and the second network node interacts to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback; or
the first information is specifically used to instruct the user equipment and the second network node interacts to determine, according to a reference signal RS, the second information, and the second information is specifically used to indicate that the to-be-identified cell is a cell corresponding to the RS received by the user equipment, or that the to-be-identified cell is a cell corresponding to a reference signal time difference RSTD of the RS received by the user equipment; or
the first information is specifically used to instruct the user equipment and the second network node interacts to determine, according to a synchronization signal SS, the second information, and the second information is specifically used to indicate that the to-be-identified cell is a cell corresponding to the SS received by the user equipment, or the second information is specifically used to indicate that the to-be-identified cell is a cell corresponding to a synchronization signal time difference SSTD of the SS received by the user equipment; or
the first information is specifically used to instruct the user equipment and the second network node interacts to determine, according to a random access preamble Preamble sequence number and a physical random access channel PRACH mask sequence number, the second information, and the second information is specifically used to indicate that the to-be-identified cell is a cell in which a random access request that is sent by the user equipment according to the Preamble sequence number and the PRACH mask sequence number is received; or
the first information is specifically used to instruct the user equipment and the second network node interacts to determine, according to a sounding reference signal SRS or a demodulation reference signal DMRS, the second information, and the second information is specifically used to indicate that the to-be-identified cell is a cell in which the SRS or the DMRS sent by the user equipment is received; or
the first information is specifically used to instruct the user equipment and the second network node interacts to determine, according to an identifier of a serving cell of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

A second aspect of the embodiments of the present invention provides a cell identification method, including:
instructing, by a first network node, the user equipment to measure a reference signal RS or a synchronization signal SS that is sent by a second network node;
receiving, by the first network node, a cell identifier and a reference signal time difference RSTD that are obtained by the user equipment by measuring the RS, or receiving, by the first network node, the cell identifier or a synchronization signal time difference SSTD that is obtained by the user equipment by measuring the SS; and
identifying, by the first network node, a to-be-identified cell according to the cell identifier and the RSTD or according to the cell identifier and the SSTD, where the to-be-identified cell is a cell of the second network node.

A third aspect of the embodiments of the present invention provides a cell identification method, including:
sending, by a first network node, request information to a second network node, or instructing, by the first network node, user equipment to send request information to the second network node, where the request information is used to request the second network node to send a cell global identifier CGI of a to-be-identified cell after the second network node receives the request information; and
receiving, by the first network node, the CGI, and identifying the to-be-identified cell according to the CGI, where the to-be-identified cell is a cell of the second network node.

A fourth aspect of the embodiments of the present invention provides a cell identification method, including:
receiving, by user equipment, first information, where the first information is used to instruct the user equipment to determine second information in interaction with a second network node, the second information is used to indicate a to-be-identified cell, and the to-be-identified cell is a cell of the second network node; and
sending, by the user equipment, the second information to a first network node to identify the to-be-identified cell.

Based on the fourth aspect, in a first possible implementation manner of the fourth aspect,
the first information is specifically used to instruct the user equipment to determine in interaction with the second network node, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback; or
the first information is specifically used to instruct the user equipment to determine in interaction with the second network node, according to a reference signal RS, the second information, and the second information is specifically used to indicate that the to-be-identified cell is a cell corresponding to the RS received by the user equipment, or that the to-be-identified cell is a cell corresponding to a reference signal time difference RSTD of the RS received by the user equipment; or
the first information is specifically used to instruct the user equipment in interaction with a second network node to determine, according to a synchronization signal SS, the second information, and the second information is specifically used to indicate that the to-be-identified cell is a cell corresponding to the SS received by the user equipment, or the second information is specifically used to indicate that the to-be-identified cell is a cell corresponding to a synchronization signal time difference SSTD of the SS received by the user equipment; or
the first information is specifically used to instruct the user equipment in interaction with a second network node to determine, according to a random access preamble Preamble sequence number and a physical random access channel PRACH mask sequence number, the second information, and the second information is specifically used to indicate that the to-be-identified cell is a cell in which a random access request that is sent by the user equipment according to the Preamble sequence number and the PRACH mask sequence number is received; or
the first information is specifically used to instruct the user equipment in interaction with a second network node to determine, according to a sounding reference signal SRS or a demodulation reference signal DMRS, the second information, and the second information is specifically used to indicate that the to-be-identified cell is a cell in which the SRS or the DMRS sent by the user equipment is received; or
the first information is specifically used to instruct the user equipment in interaction with a second network node to determine, according to an identifier of a serving cell of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

A fifth aspect of the embodiments of the present invention provides a cell identification method, including:
receiving, by user equipment, an indication message sent by a first network node, where the indication message is used to instruct the user equipment to measure a reference signal RS or a synchronization signal SS that is sent by a second network node;
measuring, by the user equipment, the RS sent by the second network node, to obtain a cell identifier and a reference signal time difference RSTD, or measuring, by the user equipment, the SS sent by the second network node, to obtain a cell identifier and the SSTD; and
reporting, by the user equipment, the cell identifier and the RSTD, or the cell identifier and the SSTD to the first network node, so that the first network node identifies, according to the RSTD or the SSTD, a to-be-identified cell from cells that use the cell identifier, where the to-be-identified cell is a cell of the second network node.

A sixth aspect of the embodiments of the present invention provides a cell identification method, including:
sending, by user equipment, request information to a second network node, where the request information is used to request the second network node to send a cell global identifier CGI of a to-be-identified cell after the second network node receives the request information; and
receiving, by the user equipment, the CGI, and sending the CGI to the first network node, so that the first network node identifies the to-be-identified cell according to the CGI, where the to-be-identified cell is a cell of the second network node.

A seventh aspect of the embodiments of the present invention provides a cell identification method, including:
receiving, by a second network node, first information, where the first information is used to instruct user equipment and the second network node interacts to determine second information, the second information is used to indicate a to-be-identified cell, and the to-be-identified cell is a cell of the second network node; and
sending, by the second network node, the second information to a first network node to identify the to-be-identified cell.

Based on the seventh aspect, in a first possible implementation manner of the seventh aspect,
the first information is specifically used to instruct the user equipment and the second network node interacts to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback; or
the first information is specifically used to instruct the user equipment and the second network node interacts to determine, according to a reference signal RS, the second information, and the second information is specifically used to indicate that the to-be-identified cell is a cell corresponding to the RS received by the user equipment, or that the to-be-identified cell is a cell corresponding to a reference signal time difference RSTD of the RS received by the user equipment; or
the first information is specifically used to instruct the user equipment and the second network node interacts to determine, according to a synchronization signal SS, the second information, and the second information is specifically used to indicate that the to-be-identified cell is a cell corresponding to the SS received by the user equipment, or the second information is specifically used to indicate that the to-be-identified cell is a cell corresponding to a synchronization signal time difference SSTD of the SS received by the user equipment; or
the first information is specifically used to instruct the user equipment and the second network node interacts to determine, according to a random access preamble Preamble sequence number and a physical random access channel PRACH mask sequence number, the second information, and the second information is specifically used to indicate that the to-be-identified cell is a cell in which a random access request that is sent by the user equipment according to the Preamble sequence number and the PRACH mask sequence number is received; or
the first information is specifically used to instruct the user equipment and the second network node interacts to determine, according to a sounding reference signal SRS or a demodulation reference signal DMRS, the second information, and the second information is specifically used to indicate that the to-be-identified cell is a cell in which the SRS or the DMRS sent by the user equipment is received; or
the first information is specifically used to instruct the user equipment and the second network node interacts to determine, according to an identifier of a serving cell of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

An eighth aspect of the embodiments of the present invention provides a cell identification method, including:
receiving, by a second network node, request information sent by user equipment or a first network node, where the request information is used to request the second network node to send a cell global identifier CGI of a to-be-identified cell after the second network node receives the request information; and
sending, by the second network node, the CGI to the user equipment according to the request information, so that the first network node identifies the to-be-identified cell according to the CGI received from the user equipment, where the to-be-identified cell is a cell of the second network node.

A ninth aspect of the embodiments of the present invention provides a cell identification apparatus, including:
a sending unit, configured to send first information to user equipment and a second network node, where the first information is used to instruct the user equipment and the second network node to perform interaction to determine second information, the second information is used to indicate a to-be-identified cell, and the to-be-identified cell is a cell of the second network node; and
a receiving unit, configured to receive the second information from the user equipment or the second network node, and identify the to-be-identified cell according to the second information.

Based on the ninth aspect, in a first possible implementation manner of the ninth aspect,
the first information is specifically used to instruct the user equipment and the second network node interacts to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback; or
the first information is specifically used to instruct the user equipment and the second network node interacts to determine, according to a reference signal RS, the second information, and the second information is specifically used to indicate that the to-be-identified cell is a cell corresponding to the RS received by the user equipment, or that the to-be-identified cell is a cell corresponding to a reference signal time difference RSTD of the RS received by the user equipment; or
the first information is specifically used to instruct the user equipment and the second network node interacts to determine, according to a synchronization signal SS, the second information, and the second information is specifically used to indicate that the to-be-identified cell is a cell corresponding to the SS received by the user equipment, or the second information is specifically used to indicate that the to-be-identified cell is a cell corresponding to a synchronization signal time difference SSTD of the SS received by the user equipment; or
the first information is specifically used to instruct the user equipment and the second network node interacts to determine, according to a random access preamble Preamble sequence number and a physical random access channel PRACH mask sequence number, the second information, and the second information is specifically used to indicate that the to-be-identified cell is a cell in which a random access request that is sent by the user equipment according to the Preamble sequence number and the PRACH mask sequence number is received; or
the first information is specifically used to instruct the user equipment and the second network node interacts to determine, according to a sounding reference signal SRS or a demodulation reference signal DMRS, the second information, and the second information is specifically used to indicate that the to-be-identified cell is a cell in which the SRS or the DMRS sent by the user equipment is received; or
the first information is specifically used to instruct the user equipment and the second network node interacts to determine, according to an identifier of a serving cell of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

A tenth aspect of the embodiments of the present invention provides a cell identification apparatus, including:
an instructing unit, configured to instruct the user equipment to measure a reference signal RS or a synchronization signal SS that is sent by a second network node;
a receiving unit, configured to receive a cell identifier and a reference signal time difference RSTD that are obtained by the user equipment by measuring the RS, or configured to receive the cell identifier or a synchronization signal time difference SSTD that is obtained by the user equipment by measuring the SS; and
an identification unit, configured to identify a to-be-identified cell according to the cell identifier and the RSTD or according to the cell identifier and the SSTD, where the to-be-identified cell is a cell of the second network node.

An eleventh aspect of the embodiments of the present invention provides a cell identification apparatus, including: an instructing unit and a receiving unit, or a sending unit and the receiving unit, where
the instructing unit is configured to instruct user equipment to send request information to a second network node, where the request information is used to request the second network node to send a cell global identifier CGI of a to-be-identified cell in which the user equipment is located after the second network node receives the request information;
the sending unit is configured to send the request information to the second network node; and
the receiving unit is configured to receive the CGI, and identify the to-be-identified cell according to the CGI, where the to-be-identified cell is a cell of the second network node.

A twelfth aspect of the embodiments of the present invention provides user equipment, including:
a receiving unit, configured to receive first information, where the first information is used to instruct the user equipment in interaction with a second network node to determine second information, the second information is used to indicate a to-be-identified cell, and the to-be-identified cell is a cell of the second network node; and
a sending unit, configured to send the second information to a first network node to identify the to-be-identified cell.

Based on the twelfth aspect, in a first possible implementation manner of the twelfth aspect,
the first information is specifically used to instruct the user equipment in interaction with the second network node to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback; or
the first information is specifically used to instruct the user equipment in interaction with the second network node to determine, according to a reference signal RS, the second information, and the second information is specifically used to indicate that the to-be-identified cell is a cell corresponding to the RS received by the user equipment, or that the to-be-identified cell is a cell corresponding to a reference signal time difference RSTD of the RS received by the user equipment; or
the first information is specifically used to instruct the user equipment in interaction with the second network node to determine, according to a synchronization signal SS, the second information, and the second information is specifically used to indicate that the to-be-identified cell is a cell corresponding to the SS received by the user equipment, or the second information is specifically used to indicate that the to-be-identified cell is a cell corresponding to a synchronization signal time difference SSTD of the SS received by the user equipment; or
the first information is specifically used to instruct the user equipment in interaction with the second network node to determine, according to a random access preamble Preamble sequence number and a physical random access channel PRACH mask sequence number, the second information, and the second information is specifically used to indicate that the to-be-identified cell is a cell in which a random access request that is sent by the user equipment according to the Preamble sequence number and the PRACH mask sequence number is received; or
the first information is specifically used to instruct the user equipment in interaction with the second network node to determine, according to a sounding reference signal SRS or a demodulation reference signal DMRS, the second information, and the second information is specifically used to indicate that the to-be-identified cell is a cell in which the SRS or the DMRS sent by the user equipment is received; or
the first information is specifically used to instruct the user equipment in interaction with the second network node to determine, according to an identifier of a serving cell of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

A thirteenth aspect of the embodiments of the present invention provides user equipment, including:
a receiving unit, configured to receive an indication message sent by a first network node, where the indication message is used to instruct the user equipment to measure a reference signal RS or a synchronization signal SS that is sent by a second network node;
an acquiring unit, configured to measure the RS sent by the second network node, to obtain a cell identifier and a reference signal time difference RSTD, or measure, by the user equipment, the SS sent by the second network node, to obtain a cell identifier and the SSTD; and
a reporting unit, configured to report the cell identifier and the RSTD, or the cell identifier and the SSTD to the first network node, so that the first network node identifies, according to the RSTD or the SSTD, a to-be-identified cell from cells that use the cell identifier, where the to-be-identified cell is a cell of the second network node.

A fourteenth aspect of the embodiments of the present invention provides user equipment, including:
a sending unit, configured to send request information to a second network node, where the request information is used to request the second network node to send a cell global identifier CGI of a to-be-identified cell after the second network node receives the request information; and
a receiving unit, configured to receive the CGI, and send the CGI to the first network node, so that the first network node identifies the to-be-identified cell according to the CGI, where the to-be-identified cell is a cell of the second network node.

A fifteenth aspect of the embodiments of the present invention provides an apparatus assisting cell identification, including:
a receiving unit, configured to receive first information, where the first information is used to instruct user equipment and the apparatus interacts to determine second information, the second information is used to indicate a to-be-identified cell, and the to-be-identified cell is a cell of the second network node; and
a sending unit, configured to send the second information to a first network node to identify the to-be-identified cell.

Based on the fifteenth aspect, in a first possible implementation manner of the fifteenth aspect,
the first information is specifically used to instruct the user equipment and the second network node interacts to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback; or
the first information is specifically used to instruct the user equipment and the second network node interacts to determine, according to a reference signal RS, the second information, and the second information is specifically used to indicate that the to-be-identified cell is a cell corresponding to the RS received by the user equipment, or that the to-be-identified cell is a cell corresponding to a reference signal time difference RSTD of the RS received by the user equipment; or
the first information is specifically used to instruct the user equipment and the second network node interacts to determine, according to a synchronization signal SS, the second information, and the second information is specifically used to indicate that the to-be-identified cell is a cell corresponding to the SS received by the user equipment, or the second information is specifically used to indicate that the to-be-identified cell is a cell corresponding to a synchronization signal time difference SSTD of the SS received by the user equipment; or
the first information is specifically used to instruct the user equipment and the second network node interacts to determine, according to a random access preamble Preamble sequence number and a physical random access channel PRACH mask sequence number, the second information, and the second information is specifically used to indicate that the to-be-identified cell is a cell in which a random access request that is sent by the user equipment according to the Preamble sequence number and the PRACH mask sequence number is received; or
the first information is specifically used to instruct the user equipment and the second network node interacts to determine, according to a sounding reference signal SRS or a demodulation reference signal DMRS, the second information, and the second information is specifically used to indicate that the to-be-identified cell is a cell in which the SRS or the DMRS sent by the user equipment is received; or
the first information is specifically used to instruct the user equipment and the second network node interacts to determine, according to an identifier of a serving cell of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

A sixteenth aspect of the embodiments of the present invention provides an apparatus assisting cell identification, including:
a receiving unit, configured to receive request information sent by user equipment or a first network node, where the request information is used to request the apparatus to send a cell global identifier CGI of a to-be-identified cell after the apparatus receives the request information; and
a sending unit, configured to send the CGI to the user equipment according to the request information, so that the first network node identifies the to-be-identified cell according to the CGI received from the user equipment.

By applying the technical solutions provided in the embodiments of the present invention, a second network node does not need to continuously broadcast system information to enable user equipment to obtain a CGI of a cell by receiving the system information broadcast by the second network node, so as to identify a to-be-identified cell. In the technical solutions provided in the embodiments of the present invention, interaction between user equipment and a second network node is triggered only when a first network node needs to identify a to-be-identified cell, so that the to-be-identified cell can be accurately identified, the to-be-identified cell can still be identified especially when confusion of a PCI of the to-be-identified cell occurs, power consumption of the second network node can be reduced, and further, interference to a system that is increased because the second network node continuously broadcasts system information can be avoided.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a signaling flowchart of performing cell identification when confusion of a PCI of a cell occurs;
FIG. 2 is a schematic flowchart of a cell identification method according to Embodiment 1 of the present invention;
FIG. 3 is a schematic flowchart of a cell identification method according to Embodiment 2 of the present invention;
FIG. 4 is a schematic flowchart of a cell identification method according to Embodiment 3 of the present invention;
FIG. 5 is a schematic flowchart of a cell identification method according to Embodiment 4 of the present invention;
FIG. 6A is a schematic flowchart of a cell identification method according to Embodiment 5 of the present invention;
FIG. 6B is a schematic flowchart of a cell identification method according to Embodiment 6 of the present invention;
FIG. 7A and FIG. 7B are schematic flowcharts of a cell identification method according to Embodiment 7 of the present invention;
FIG. 8 is a schematic flowchart of a cell identification method according to Embodiment 8 of the present invention;
FIG. 9A and FIG. 9B are schematic structural diagrams of a cell identification apparatus according to Embodiment 9 of the present invention;
FIG. 10A and FIG. 10B are schematic structural diagrams of user equipment according to Embodiment 10 of the present invention;
FIG. 11 is a schematic flowchart of a cell identification method according to Embodiment 11 of the present invention;
FIG. 12A and FIG. 12B are schematic structural diagrams of a cell identification apparatus according to Embodiment 12 of the present invention;
FIG. 13A and FIG. 13B are schematic structural diagrams of user equipment according to Embodiment 12 of the present invention;
FIG. 14A and FIG. 14B are schematic structural diagrams of an apparatus assisting cell identification according to Embodiment 14 of the present invention;
FIG. 15 is a schematic flowchart of a cell identification method according to Embodiment 15 of the present invention;
FIG. 16A and FIG. 16B are schematic structural diagrams of a cell identification apparatus according to Embodiment 16 of the present invention;
FIG. 17A and FIG. 17B are schematic structural diagrams of user equipment according to Embodiment 17 of the present invention; and
FIG. 18A and FIG. 18B are schematic structural diagrams of an apparatus assisting cell identification according to Embodiment 18 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

In the embodiments of the present invention, a first network node may be an evolved base station (E-UTRAN NodeB, eNB), or may be a network node with relatively high power and relatively large coverage, such as a home base station gateway (HeNB GW, Home eNB Gateway) in a Long Term Evolution network, a home base station gateway (HNB GW, Home NodeB Gateway) in a Universal Mobile Telecommunication System network, a base station (UTRAN NodeB, NB), a donor base station (Donor eNB, DeNB), or a macro base station. A second network node may be a network node with relatively low power and relatively small coverage, such as a small cell node (Small Cell Node, SCN), a micro base station (Micro (e)NB), a pico base station (Pico (e)NB), a home node (Home (e)NodeB, also referred to as Femto), a relay node (Relay Node), or a WiFi access point; may be an evolved base station (E-UTRAN NodeB, eNB); or may be special user equipment.

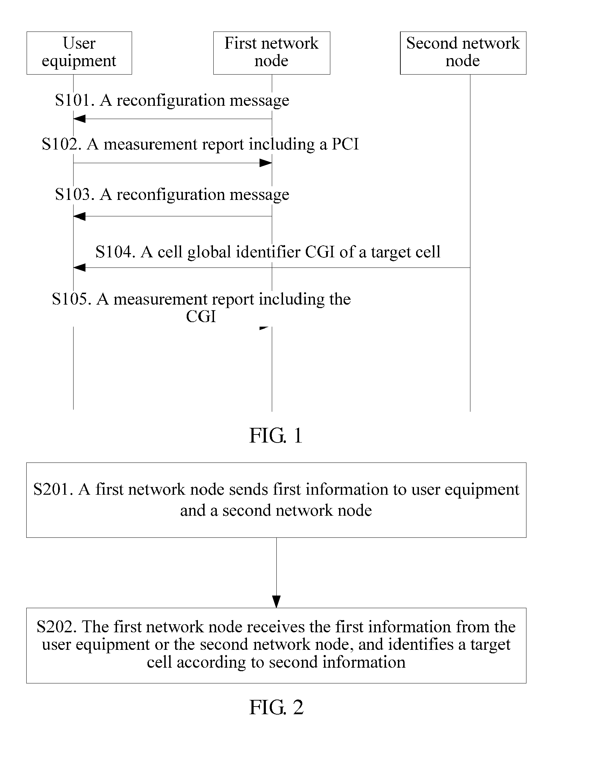

FIG. 1 is a signaling flowchart of performing cell identification when confusion of a PCI of a cell occurs. As shown in FIG. 1, the process includes:
Step S101. A first network node sends a reconfiguration message to user equipment, where the reconfiguration message is used to instruct the user equipment to perform, according to a cell measurement configuration, a cell measurement.

Specifically, the first network node may measure a frequency, reference signal received power, or reference signal received quality of a to-be-identified cell according to the cell measurement configuration included in the reconfiguration message.
Step S102. The user equipment sends a measurement report to the first network node.

Specifically, the user equipment performs a cell measurement, and when a reporting condition (for example, a reporting condition of a measurement report A1 corresponding to an event A1, or a reporting condition of a measurement report B1 corresponding to an event B1) is met, the user equipment sends a measurement report to the first network node, where the measurement report includes a PCI of the to-be-identified cell.
Step S103. The first network node sends a reconfiguration message to the user equipment again.

Specifically, after the first network node receives a PCI of a cell that is sent by the user equipment and that meets a reporting condition, if the first network node cannot determine, according to the PCI, that the cell sent by the user equipment and meeting the reporting condition is which cell (for example, multiple cells share a same PCI, when performing a cell measurement, the user equipment sends the PCI corresponding to the to-be-identified cell in these multiple cells to a base station, and in this case, the base station cannot determine, according to the PCI, which cell or which cells is or are reported by the user equipment), the first network node sends a reconfiguration message to the user equipment again, where the reconfiguration message is used to request the user equipment to read CGIs of cells that are sent by the user equipment and that meet the reporting condition, and these CGIs may be carried in system information.
Step S104. The user equipment reads a CGI included in system information of the to-be-identified cell.

Specifically, the user equipment reads the CGI from the system information of the to-be-identified cell served by a second network node. Because the second network node cannot learn when the user equipment needs to obtain the system information, the second network node needs to continuously broadcast the system information, so that the user equipment can obtain the CGI of the to-be-identified cell when needing to obtain the CGI of the to-be-identified cell.
Step S105. The user equipment sends a measurement report to the first network node again, where the report includes the CGI of the to-be-identified cell, and the first network node determines the to-be-identified cell according to the CGI.

Specifically, after obtaining the CGI of the foregoing to-be-identified cell, the user equipment sends a measurement report to the first network node again, where the measurement report includes the CGI of the foregoing to-be-identified cell, and the first network node can uniquely determine the to-be-identified cell according to the CGI.

In the cell identification method shown in FIG. 1, when a PCI that is reported by user equipment served by a first network node and that is of a to-be-identified cell is confused with a PCI of another cell, the first network node requires again the user equipment to report a CGI of the to-be-identified cell, so that the first network node can uniquely determine the to-be-identified cell according to the CGI. However, in order to enable the user equipment to obtain the CGI of the to-be-identified cell, a second network node needs to continuously broadcast system information, where the system information is mainly used by idle user equipment and is not used in a service communication process, and continuously broadcasting the system information increases power consumption of the second network node and also increases interference to an entire communications system. Further, in the cell identification method shown in FIG. 1, the user equipment reads the CGI of the to-be-identified cell and then reports the CGI to the first network node. In this process, a relatively long delay sometimes exists, and normal service communication may be affected because the first network node cannot identify the to-be-identified cell in time, which lowers user experience.

FIG. 2 is a schematic flowchart of a cell identification method according to Embodiment 1 of the present invention. As shown in FIG. 2, this embodiment is an operation performed by a first network node, and the method in this embodiment includes:
Step S201. A first network node sends first information to user equipment and a second network node, where the first information is used to instruct the user equipment and the second network node to perform interaction to determine second information, the second information is used to indicate a to-be-identified cell, and the to-be-identified cell is a cell of the second network node.
Step S202. The first network node receives the second information from the user equipment or the second network node, and identifies the to-be-identified cell according to the second information.

Optionally, the first information may be sent by the first network node to the user equipment and the second network node by using a radio resource control (Radio Resource Control, RRC) message, a Medium Access Control (Medium Access Control, MAC) message, or a physical layer message. Optionally, the second information may be sent by the user equipment and the second network node to the first network node by using an RRC message, a MAC message, or a physical layer message.

Optionally, the first information is specifically used to instruct the user equipment and the second network node interacts to determine, according to a cell-radio network temporary identifier (Cell-Radio Network Temporary Identifier, C-RNTI) corresponding to the to-be-identified cell, the second information, and the second information is specifically used to indicate that the to-be-identified cell is a cell in which the user equipment descrambles a physical downlink control channel (Physical Downlink Control Channel, PDCCH) according to the C-RNTI and to which the user equipment sends uplink data or a downlink data feedback.

Optionally, the first information is specifically used to instruct the user equipment and the second network node interacts to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback.

Optionally, the first information is specifically used to instruct the user equipment and the second network node interacts to determine, according to a reference signal (Reference Signal, RS), the second information. For example, the user equipment and the second network node may determine the second information according to a parameter related to the RS, where the parameter related to the RS includes an identifier of the RS, a quantity of antenna ports of the RS, a time-frequency resource configuration of the RS, a power configuration of the RS, a scrambling configuration of the RS, sending bandwidth of the RS, a sending period of the RS, a sending start point of the RS, duration for which the RS is sent once, or the like. When the RS is used to determine the second information, the second information is specifically used to indicate that the to-be-identified cell is a cell corresponding to the RS that is obtained, by means of measurement, by the user equipment by using the parameter related to the RS, or the second information is specifically used to indicate that the to-be-identified cell is a cell corresponding to a reference signal time difference (Reference Signal Time Difference, RSTD) that is determined by the user equipment by using the parameter related to the RS.

Optionally, the first information is specifically used to instruct the user equipment and the second network node interacts to determine, according to a synchronization signal (Synchronization Signal, SS), the second information. For example, the user equipment and the second network node may determine the second information according to a parameter related to the SS, where the parameter related to the SS includes an identifier of the SS, a quantity of antenna ports of the SS, a time-frequency resource configuration of the SS, a power configuration of the SS, a scrambling configuration of the SS, sending bandwidth of the SS, a sending period of the SS, a sending start point of the SS, duration for which the SS is sent once, or the like. When the SS is used to determine the second information, the second information is specifically used to indicate that the to-be-identified cell is a cell corresponding to the SS that is obtained, by means of measurement, by the user equipment by using the parameter related to the SS, or the second information is specifically used to indicate that the to-be-identified cell is a cell corresponding to a synchronization signal time difference (SSTD) that is determined by the user equipment by using the parameter related to the SS.

Optionally, the first information is specifically used to instruct the user equipment and the second network node interacts to determine, according to a random access preamble (Preamble) sequence number and a physical random access channel (Physical Random Access Channel, PRACH) mask sequence number, the second information, and the second information is specifically used to indicate that the to-be-identified cell is a cell in which a random access request initiated by the user equipment according to the Preamble sequence number and the PRACH mask sequence number is monitored, or the second information is specifically used to indicate that the to-be-identified cell is a cell corresponding to maximum reference signal received power or best reference signal received quality that is determined by the user equipment according to the Preamble sequence number and the PRACH mask sequence number.

Optionally, the first information is specifically used to instruct the user equipment and the second network node interacts to determine, according to a sounding reference signal (Sounding Reference Signal, SRS) or a demodulation reference signal (DeModulation Reference Signal, DMRS), the second information, and the second information is specifically used to indicate that the to-be-identified cell is a cell in which the SRS or the DMRS sent by the user equipment is received, or the second information is specifically used to indicate that the to-be-identified cell is a cell corresponding to maximum reference signal received power or best reference signal received quality that is obtained, by means of measurement, by the user equipment according to the SRS or the DMRS.

Optionally, the first information is specifically used to instruct the user equipment and the second network node interacts to determine, according to an identifier of a serving cell (for example, a PCI of the serving cell) of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

Optionally, the sending, by a first network node, first information to the user equipment and the second network node includes:
determining, by the first network node, whether the to-be-identified cell can be identified according to a PCI or primary synchronization code (primary synchronization code, PSC) reported by the user equipment; and
if not, sending, by the first network node, the first information to the user equipment and the second network node.

By applying the technical solution provided in Embodiment 1 of the present invention, a second network node can communicate and interact with user equipment to determine a to-be-identified cell after receiving an indication of a first network node, and the second network node does not need to continuously broadcast a system message, so that power consumption of the second network node is reduced and unnecessary interference to a system is avoided.

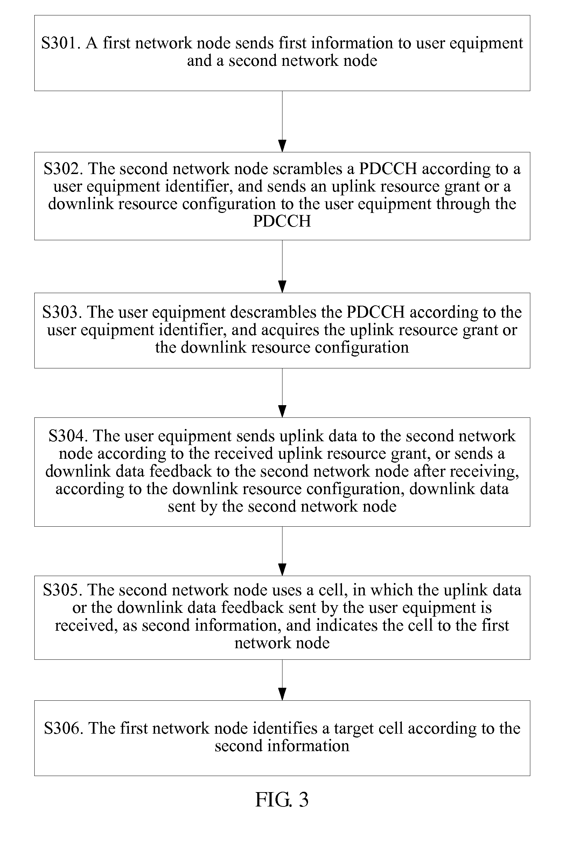

FIG. 3 is a schematic flowchart of a cell identification method according to Embodiment 2 of the present invention. As shown in FIG. 3, the method includes the following content, and Embodiment 2 of the present invention further provides a detailed description of Embodiment 1 of the present invention.

Step S301. A first network node sends first information to user equipment and a second network node, where the first information is used to instruct the user equipment and the second network node interacts to determine, according to a user equipment identifier, second information, the second information is used to indicate a to-be-identified cell, and the to-be-identified cell is a cell of the second network node.

Optionally, the user equipment identifier may be an international mobile subscriber identity (International Mobile SubscriberIdentification Number, IMSI), an international mobile equipment identity (International Mobile Equipment Identity, IMEI), or the like.

Step S302. The second network node scrambles a PDCCH according to the user equipment identifier, and sends an uplink resource grant or a downlink resource configuration to the user equipment through the PDCCH.

Step S303. The user equipment descrambles the PDCCH according to the user equipment identifier, and acquires the uplink resource grant or the downlink resource configuration.

Step S304. The user equipment sends uplink data to the second network node according to the uplink resource grant, or the user equipment sends a downlink data feedback to the second network node after receiving, according to the downlink resource configuration, downlink data sent by the second network node.

Step S305. If the second network node receives the uplink data or the downlink data feedback sent by the user equipment, the second network node uses a cell, in which the uplink data or the downlink data feedback sent by the user equipment is received, as the to-be-identified cell, and indicates the to-be-identified cell to the first network node by using the second information.

Step S306. The first network node identifies, according to the second information, that the to-be-identified cell is which cell or which cells.

Optionally, in step 301 to step 306, the user equipment identifier may also be replaced by a C-RNTI (the C-RNTI may be allocated by the first network node to the user equipment and the second network node, or may be preconfigured by the user equipment and the second network node), and the second network node and the user equipment may scramble or descramble the PDCCH according to the C-RNTI, and indicates, to the first network node, a cell, to which the user equipment sends the uplink data or the downlink data feedback, as the second information, so that the first network node identifies the to-be-identified cell.

By applying the technical solution provided in Embodiment 2 of the present invention, a second network node does not need to continuously broadcast system information to enable user equipment to obtain a CGI of a cell by receiving the system information broadcast by the second network node, so as to identify a to-be-identified cell. In the technical solution provided in this embodiment of the present invention, interaction between user equipment and a second network node is triggered only when a first network node needs to identify a to-be-identified cell, so that the to-be-identified cell can be accurately identified, the to-be-identified cell can still be identified especially when confusion of a PCI of the to-be-identified cell occurs, power consumption of the second network node can be reduced, and further, interference to a system that is increased because the second network node continuously broadcasts system information can be avoided.

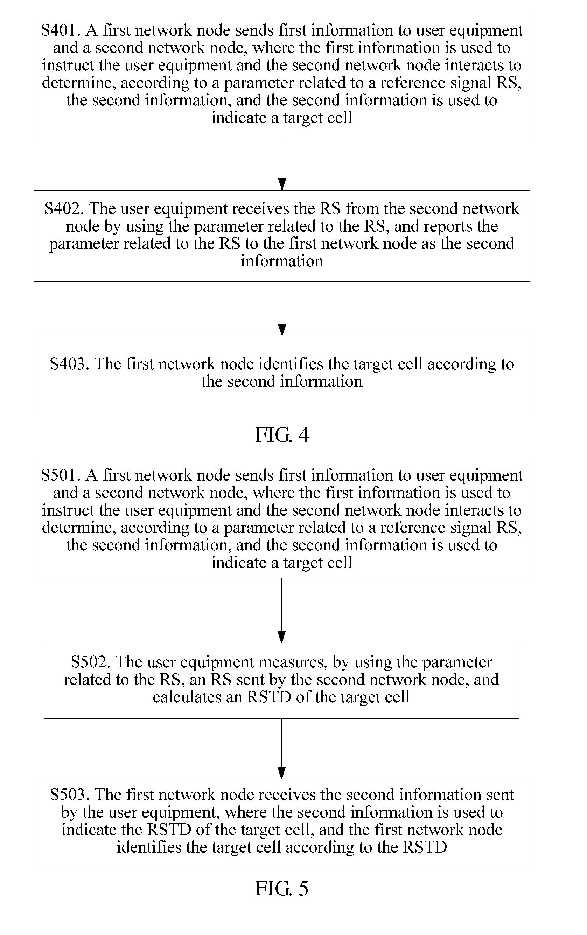

FIG. 4 is a schematic flowchart of a cell identification method according to Embodiment 3 of the present invention. Embodiment 3 of the present invention further provides a detailed description of Embodiment 1, and the method includes the following content.

S401. A first network node sends first information to user equipment and a second network node, where the first information is used to instruct the user equipment and the second network node interacts to determine, according to a parameter related to a reference signal RS, the second information, and the second information is used to indicate a to-be-identified cell.

For example, the parameter related to the RS includes an identifier of the RS, a quantity of antenna ports of the RS, a time-frequency resource configuration of the RS, a power configuration of the RS, a scrambling configuration of the RS, sending bandwidth of the RS, a sending period of the RS, a sending start point of the RS, duration for which the RS is sent once, or the like.

Optionally, the parameter related to the RS may be allocated by the first network node to the user equipment and the second network node, or may be preconfigured by the user equipment and the second network node. The parameter related to the RS corresponds to the second network node, and the user equipment using the parameter related to the RS can receive an RS sent by the second network node or a cell of the second network node. If the user equipment does not use the parameter related to the RS and corresponding to the second network node, the user equipment cannot receive an RS sent by the second network node or a cell of the second network node.

S402. If the user equipment receives the RS from the second network node by using the parameter related to the RS, the user equipment reports the parameter related to the RS to the first network node as the second information.

As an example, the first network node indicates different groups of parameters related to an RS to service communication nodes of various cell by using the first information (the second network node or a cell of the second network node corresponds to one group of parameters related to the RS thereof), and further sends the different groups of parameters related to the RS to the user equipment. The user equipment performs an RS measurement by using one group of the different groups of parameters related to the RS, if no RS is obtained by means of measurement or an RS obtained by means of measurement is not sent by the second network node, the user equipment uses another group of the different groups of parameters related to the RS, until an RS from the second network node can be received after one group of parameters related to the RS is used.

S403. The first network node can identify, according to the second information, that a cell corresponding to the parameter related to the RS is which cell or which cells, where the cell is the to-be-identified cell or these cells are to-be-identified cells.

Similarly, the RS in this embodiment of the present invention may be replaced by a synchronization signal (Synchronization Signal, SS). Correspondingly, the parameter related to the RS is replaced by a parameter related to the synchronization signal, and the parameter related to the synchronization signal includes an identifier of the SS, a quantity of antenna ports of the SS, a time-frequency resource configuration of the SS, a power configuration of the SS, a scrambling configuration of the SS, sending bandwidth of the SS, a sending period of the SS, a sending start point of the SS, duration for which the SS is sent once, or the like. A cell identification process is similar to S401 to S404, and details are not provided again.

By applying the technical solution provided in Embodiment 3 of the present invention, a second network node does not need to continuously broadcast system information to enable user equipment to obtain a CGI of a cell by receiving the system information broadcast by the second network node, so as to identify a to-be-identified cell. In the technical solution provided in this embodiment of the present invention, interaction between user equipment and a second network node is triggered only when a first network node needs to identify a to-be-identified cell, so that the to-be-identified cell can be accurately identified, the to-be-identified cell can still be identified especially when confusion of a PCI of the to-be-identified cell occurs, power consumption of the second network node can be reduced, and further, interference to a system that is increased because the second network node continuously broadcasts system information can be avoided.

FIG. 5 is a schematic flowchart of a cell identification method according to Embodiment 4 of the present invention. Embodiment 4 of the present invention further provides a detailed description of Embodiment 1, and the method includes the following content.

S501. A first network node sends first information to user equipment and a second network node, where the first information is used to instruct the user equipment and the second network node interacts to determine, according to a parameter related to a reference signal RS, the second information, and the second information is used to indicate a to-be-identified cell.

For example, the parameter related to the RS includes an identifier of the RS, a quantity of antenna ports of the RS, a time-frequency resource configuration of the RS, a power configuration of the RS, a scrambling configuration of the RS, sending bandwidth of the RS, a sending period of the RS, a sending start point of the RS, duration for which the RS is sent once, or the like.

S502. The user equipment measures, by using the parameter related to the RS, an RS sent by a second network node, and calculates, according to a frame start time of the to-be-identified cell and a frame start time of a current serving cell of the user equipment, an RSTD of the to-be-identified cell, where the RSTD is a time difference between the frame start time of the to-be-identified cell and the frame start time of the current serving cell of the user equipment.

S503. The first network node receives the second information sent by the user equipment, where the second information is used to indicate the RSTD of the to-be-identified cell, and the first network node identifies the to-be-identified cell according to the RSTD.

Specifically, the first network node may preconfigure or negotiate a frame start time of each cell with a service communication node (including the second network node) of each cell, so that an RSTD between each cell and the current serving cell of the user equipment is different; in this way, the to-be-identified cell uniquely corresponds to one RSTD, so that the first network node identifies the to-be-identified cell according to the received RSTD of the to-be-identified cell.

Similarly, the RS in this embodiment of the present invention may be replaced by a synchronization signal (Synchronization Signal, SS). Correspondingly, the parameter related to the RS is replaced by a parameter related to the synchronization signal, and the parameter related to the synchronization signal includes an identifier of the SS, a quantity of antenna ports of the SS, a time-frequency resource configuration of the SS, a power configuration of the SS, a scrambling configuration of the SS, sending bandwidth of the SS, a sending period of the SS, a sending start point of the SS, duration for which the SS is sent once, or the like. Correspondingly, the RSTD is replaced by a synchronization signal time difference (Synchronization Signal Time Difference, SSTD). A cell identification process is similar to S501 to S504, and details are not provided again.

By applying the technical solution provided in Embodiment 4 of the present invention, a second network node does not need to continuously broadcast system information to enable user equipment to obtain a CGI of a cell by receiving the system information broadcast by the second network node, so as to identify a to-be-identified cell. In the technical solution provided in this embodiment of the present invention, interaction between user equipment and a second network node is triggered only when a first network node needs to identify a to-be-identified cell, so that the to-be-identified cell can be accurately identified, the to-be-identified cell can still be identified especially when confusion of a PCI of the to-be-identified cell occurs, power consumption of the second network node can be reduced, and further, interference to a system that is increased because the second network node continuously broadcasts system information can be avoided.

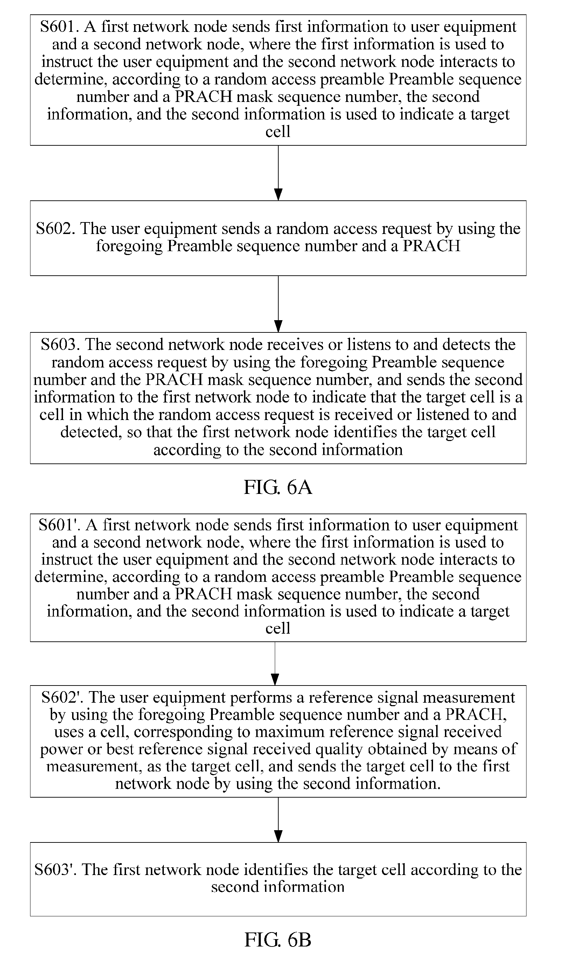

FIG. 6A is a method flowchart of a cell identification method according to Embodiment 5 of the present invention. Embodiment 5 of the present invention further provides a detailed description of Embodiment 1, and the method includes the following content.

S601. A first network node sends first information to user equipment and a second network node, where the first information is used to instruct the user equipment and the second network node interacts to determine, according to a random access preamble Preamble sequence number and a PRACH mask sequence number, the second information, and the second information is used to indicate a to-be-identified cell.

Optionally, the Preamble sequence number and the PRACH mask sequence number may be allocated by the first network node to the user equipment and the second network node, or may be preconfigured by the user equipment and the second network node.

S602. The user equipment sends a random access request by using the foregoing Preamble sequence number and the PRACH mask sequence number.

Specifically, the user equipment may send the random access request to the second network node or the first network node by using the foregoing Preamble sequence number and the PRACH mask sequence number.

S603. If the second network node receives or monitors the random access request by using the foregoing Preamble sequence number and the PRACH mask sequence number, the second network node sends the second information to the first network node to indicate that the to-be-identified cell is a cell in which the random access request initiated by the user equipment according to the Preamble sequence number and the PRACH mask sequence number is received or monitored, so that the first network node identifies the to-be-identified cell according to the second information.

Optionally, based on Embodiment 5 of the present invention, as shown in FIG. 6B, Embodiment 6 of the present invention provides a schematic flowchart of another cell identification method, and the method includes the following content.

S601' is the same as S601.

S602'. The user equipment performs a reference signal measurement by using the foregoing Preamble sequence number and the PRACH mask sequence number, uses a cell, corresponding to maximum reference signal received power or best reference signal received quality obtained by means of measurement, as the to-be-identified cell, and sends the to-be-identified cell to the first network node by using the second information.

S603'. The first network node identifies the to-be-identified cell according to the second information.

By applying the technical solutions provided in Embodiment 5 and Embodiment 6 of the present invention, a second network node does not need to continuously broadcast system information to enable user equipment to obtain a CGI of a cell by receiving the system information broadcast by the second network node, so as to identify a to-be-identified cell. In the technical solutions provided in the embodiments of the present invention, interaction between user equipment and a second network node is triggered only when a first network node needs to identify a to-be-identified cell, so that the to-be-identified cell can be accurately identified, the to-be-identified cell can still be identified especially when confusion of a PCI of the to-be-identified cell occurs, power consumption of the second network node can be reduced, and further, interference to a system that is increased because the second network node continuously broadcasts system information can be avoided.

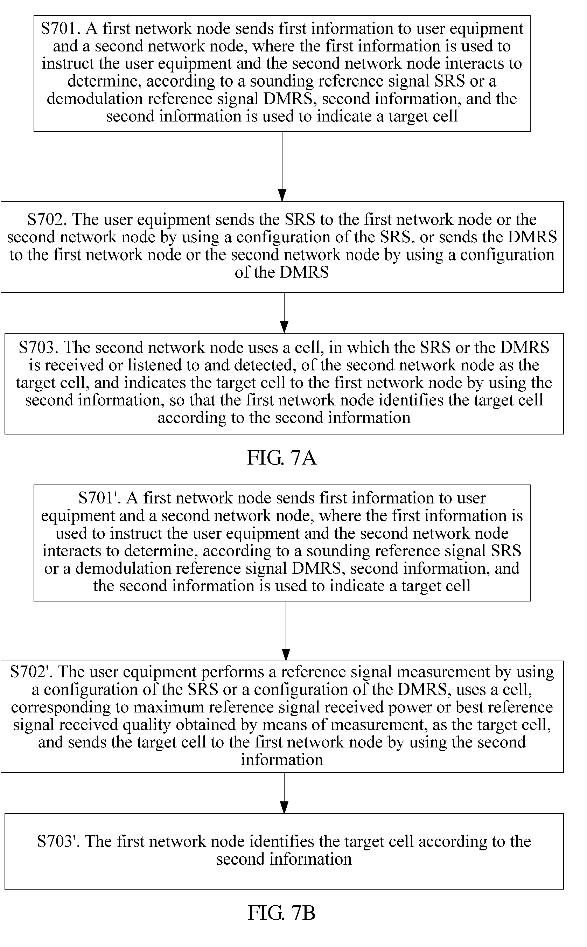

FIG. 7A and FIG. 7B are schematic flowcharts of a cell identification method according to Embodiment 7 of the present invention. Embodiment 7 of the present invention further provides a detailed description of Embodiment 1, and the method includes the following content.

S701. A first network node sends first information to user equipment and a second network node, where the first information is used to instruct the user equipment and the second network node interacts to determine, according to a sounding reference signal SRS or a demodulation reference signal DMRS, second information, and the second information is used to indicate a to-be-identified cell.

Specifically, a configuration of the SRS or a configuration of the DMRS may be indicated by the first network node to the user equipment and the second network node, so that the user equipment and the second network node performs an SRS measurement or a DMRS measurement by using the configuration. The configuration of the SRS may include a number of the SRS, a time-frequency resource and the like, and the configuration of the DMRS may include a number of the DMRS, a time-frequency resource and the like

S702. The user equipment sends the SRS to the first network node or the second network node by using a configuration of the SRS, or sends the DMRS to the first network node or the second network node by using a configuration of the DMRS.

S703. If the second network node receives or monitors, according to the configuration of the SRS, the SRS sent by the user equipment or receives or monitors, according to the configuration of the DMRS, the DMRS sent by the user equipment, the second network node uses a cell, in which the SRS or the DMRS is received or monitored, of the second network node as the to-be-identified cell, and indicates the to-be-identified cell to the first network node by using the second information, so that the first network node identifies the to-be-identified cell according to the second information.

Optionally, in Embodiment 7 of the present invention, FIG. 7B is a flowchart of another cell identification method.

S701' is the same as S701.

S702'. The user equipment performs a reference signal measurement by using a configuration of the SRS or a configuration of the DMRS, uses a cell, corresponding to maximum reference signal received power or best reference signal received quality obtained by means of measurement, as the to-be-identified cell, and sends the to-be-identified cell to the first network node by using the second information.

S703'. The first network node identifies the to-be-identified cell according to the second information.

By applying the technical solution provided in Embodiment 7 of the present invention, a second network node does not need to continuously broadcast system information to enable user equipment to obtain a CGI of a cell by receiving the system information broadcast by the second network node, so as to identify a to-be-identified cell. In the technical solution provided in this embodiment of the present invention, interaction between user equipment and a second network node is triggered only when a first network node needs to identify a to-be-identified cell, so that the to-be-identified cell can be accurately identified, the to-be-identified cell can still be identified especially when confusion of a PCI of the to-be-identified cell occurs, power consumption of the second network node can be reduced, and further, interference to a system that is increased because the second network node continuously broadcasts system information can be avoided.

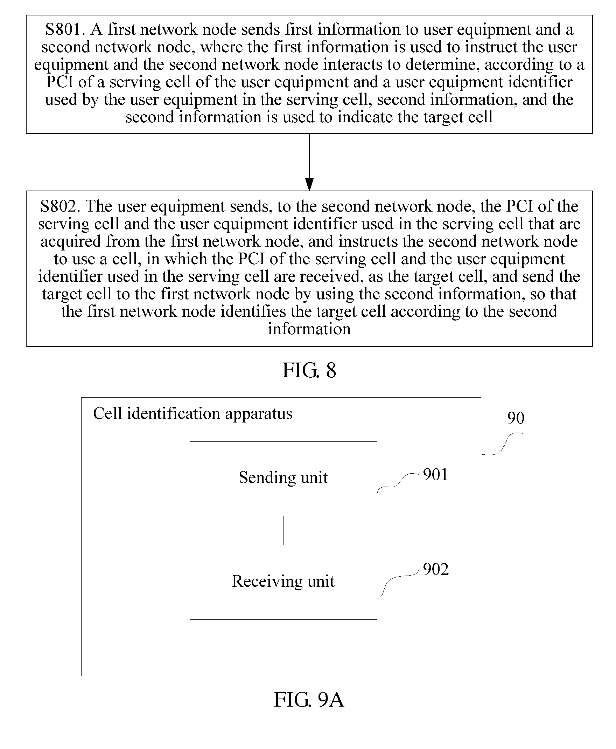

FIG. 8 is a schematic flowchart of a cell identification method according to Embodiment 8 of the present invention. Embodiment 8 further provides a detailed description of Embodiment 1, and the method includes the following content.

S801. A first network node sends first information to user equipment and a second network node, where the first information is used to instruct the user equipment and the second network node interacts to determine, according to a PCI of a serving cell of the user equipment and a user equipment identifier used by the user equipment in the serving cell, second information, and the second information is used to indicate the to-be-identified cell.

Optionally, the first network node may broadcast, to the second network node, the PCI of the serving cell and the user equipment identifier used in the serving cell.

S802. The user equipment sends, to the second network node, the PCI of the serving cell and the user equipment identifier used in the serving cell that are acquired from the first network node, and instructs the second network node to use a cell, in which the PCI of the serving cell and the user equipment identifier used in the serving cell are received, as the to-be-identified cell, and send the to-be-identified cell to the first network node by using the second information, so that the first network node identifies the to-be-identified cell according to the second information.

Optionally, in this embodiment of the present invention, the user equipment identifier used by the user equipment in the serving cell may be replaced by a C-RNTI. The user equipment may send, to the second network node, the PCI of the serving cell that is acquired from the first network node and a C-RNTI allocated by the first network node, and instruct the second network node to use a cell, in which the PCI of the serving cell and the C-RNTI are received, as the to-be-identified cell, and send the to-be-identified cell to the first network node by using the second information.

By applying the technical solution provided in Embodiment 8 of the present invention, a second network node does not need to continuously broadcast system information to enable user equipment to obtain a CGI of a cell by receiving the system information broadcast by the second network node, so as to identify a to-be-identified cell. In the technical solution provided in this embodiment of the present invention, interaction between user equipment and a second network node is triggered only when a first network node needs to identify a to-be-identified cell, so that the to-be-identified cell can be accurately identified, the to-be-identified cell can still be identified especially when confusion of a PCI of the to-be-identified cell occurs, power consumption of the second network node can be reduced, and further, interference to a system that is increased because the second network node continuously broadcasts system information can be avoided.

Embodiment 9 of the present invention provides a cell identification apparatus 90. The apparatus may be the foregoing first network node, and perform actions of the first network node in any one of the method embodiments in Embodiments 1 to 8. FIG. 9A is a schematic structural diagram of the apparatus. The apparatus includes:
a sending unit 901, configured to send first information to user equipment and a second network node, where the first information is used to instruct the user equipment and the second network node interacts to perform interaction to determine second information, the second information is used to indicate a to-be-identified cell, and the to-be-identified cell is a cell of the second network node; and
a receiving unit 902, configured to receive the second information from the user equipment or the second network node, and identify the to-be-identified cell according to the second information.

Optionally, the first information may be sent by the sending unit 901 to the user equipment and the second network node by using an RRC message, a MAC message, or a physical layer message. Optionally, the second information may be sent by the user equipment and the second network node to the first network node by using an RRC message, a MAC message, or a physical layer message.

Optionally, the first information is specifically used to instruct the user equipment and the second network node interacts to determine, according to a C-RNTI corresponding to the to-be-identified cell, the second information, and the second information is specifically used to indicate that the to-be-identified cell is a cell in which the user equipment descrambles a physical downlink control channel PDCCH according to the C-RNTI and to which the user equipment sends uplink data or a downlink data feedback.

Optionally, the first information is specifically used to instruct the user equipment and the second network node interacts to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback.

Optionally, the first information is specifically used to instruct the user equipment and the second network node interacts to determine, according to an RS, the second information. For example, the user equipment and the second network node may determine the second information according to a parameter related to the RS, where the parameter related to the RS includes an identifier of the RS, a quantity of antenna ports of the RS, a time-frequency resource configuration of the RS, a power configuration of the RS, a scrambling configuration of the RS, sending bandwidth of the RS, a sending period of the RS, a sending start point of the RS, duration for which the RS is sent once, or the like. When the RS is used to determine the second information, the second information is specifically used to indicate that the to-be-identified cell is a cell corresponding to the RS that is obtained, by means of measurement, by the user equipment by using the parameter related to the RS, or the second information is specifically used to indicate that the to-be-identified cell is a cell corresponding to an RSTD that is determined by the user equipment by using the parameter related to the RS.

Optionally, the first information is specifically used to instruct the user equipment and the second network node interacts to determine, according to an SS, the second information. For example, the user equipment and the second network node may determine the second information according to a parameter related to the SS, where the parameter related to the SS includes an identifier of the SS, a quantity of antenna ports of the SS, a time-frequency resource configuration of the SS, a power configuration of the SS, a scrambling configuration of the SS, sending bandwidth of the SS, a sending period of the SS, a sending start point of the SS, duration for which the SS is sent once, or the like. When the SS is used to determine the second information, the second information is specifically used to indicate that the to-be-identified cell is a cell corresponding to the SS that is obtained, by means of measurement, by the user equipment by using the parameter related to the SS, or the second information is specifically used to indicate that the to-be-identified cell is a cell corresponding to an SSTD that is determined by the user equipment by using the parameter related to the SS.

Optionally, the first information is specifically used to instruct the user equipment and the second network node interacts to determine, according to a random access preamble (Preamble) sequence number and a PRACH mask sequence number, the second information, and the second information is specifically used to indicate that the to-be-identified cell is a cell in which a random access request initiated by the user equipment according to the Preamble sequence number and the PRACH mask sequence number is monitored, or the second information is specifically used to indicate that the to-be-identified cell is a cell corresponding to maximum reference signal received power or best reference signal received quality that is determined by the user equipment according to the Preamble sequence number and the PRACH mask sequence number.

Optionally, the first information is specifically used to instruct the user equipment and the second network node interacts to determine, according to an SRS or a DMRS, the second information, and the second information is specifically used to indicate that the to-be-identified cell is a cell in which the SRS or the DMRS sent by the user equipment is received, or the second information is specifically used to indicate that the to-be-identified cell is a cell corresponding to maximum reference signal received power or best reference signal received quality that is obtained, by means of measurement, by the user equipment according to the SRS or the DMRS.

Optionally, the first information is specifically used to instruct the user equipment and the second network node interacts to determine, according to an identifier of a serving cell (for example, a PCI of the serving cell) of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

Optionally, the apparatus further includes: a determining unit, configured to determine whether the to-be-identified cell in which the user equipment is located can be identified according to a PCI or a primary synchronization code PSC reported by the user equipment; and if not, notify the sending unit of sending the first information to the user equipment and the second network node.

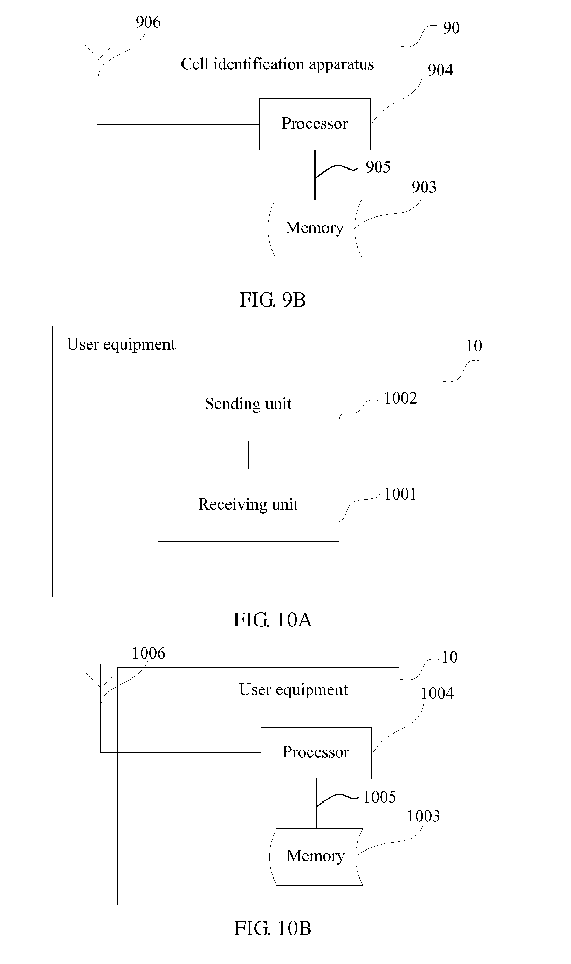

FIG. 9B is another schematic structural diagram of the cell identification apparatus 90 according to Embodiment 9 of the present invention. The apparatus includes:
a memory 903, configured to store computer code, where the computer code includes: sending first information to user equipment and a second network node, where the first information is used to instruct the user equipment and the second network node to perform interaction to determine second information, the second information is used to indicate a to-be-identified cell, and the to-be-identified cell is a cell of the second network node; and receiving the second information from the user equipment or the second network node, and identifying the to-be-identified cell according to the second information; and
a processor 904, configured to execute the foregoing computer code.

Optionally, in the foregoing computer code, the first information is specifically used to instruct the user equipment and the second network node interacts to determine, according to a C-RNTI corresponding to the to-be-identified cell, the second information, and the second information is specifically used to indicate that the to-be-identified cell is a cell in which the user equipment descrambles a physical downlink control channel PDCCH according to the C-RNTI and to which the user equipment sends uplink data or a downlink data feedback.

Optionally, the first information is specifically used to instruct the user equipment and the second network node interacts to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback.

Optionally, the first information is specifically used to instruct the user equipment and the second network node interacts to determine, according to an RS, the second information. For example, the user equipment and the second network node may determine the second information according to a parameter related to the RS, where the parameter related to the RS includes an identifier of the RS, a quantity of antenna ports of the RS, a time-frequency resource configuration of the RS, a power configuration of the RS, a scrambling configuration of the RS, sending bandwidth of the RS, a sending period of the RS, a sending start point of the RS, duration for which the RS is sent once, or the like. When the RS is used to determine the second information, the second information is specifically used to indicate that the to-be-identified cell is a cell corresponding to the RS that is obtained, by means of measurement, by the user equipment by using the parameter related to the RS, or the second information is specifically used to indicate that the to-be-identified cell is a cell corresponding to an RSTD that is determined by the user equipment by using the parameter related to the RS.

Optionally, the first information is specifically used to instruct the user equipment and the second network node interacts to determine, according to an SS, the second information. For example, the user equipment and the second network node may determine the second information according to a parameter related to the SS, where the parameter related to the SS includes an identifier of the SS, a quantity of antenna ports of the SS, a time-frequency resource configuration of the SS, a power configuration of the SS, a scrambling configuration of the SS, sending bandwidth of the SS, a sending period of the SS, a sending start point of the SS, duration for which the SS is sent once, or the like. When the SS is used to determine the second information, the second information is specifically used to indicate that the to-be-identified cell is a cell corresponding to the SS that is obtained, by means of measurement, by the user equipment by using the parameter related to the SS, or the second information is specifically used to indicate that the to-be-identified cell is a cell corresponding to an SSTD that is determined by the user equipment by using the parameter related to the SS.

Optionally, the first information is specifically used to instruct the user equipment and the second network node interacts to determine, according to a random access preamble (Preamble) sequence number and a PRACH mask sequence number, the second information, and the second information is specifically used to indicate that the to-be-identified cell is a cell in which a random access request initiated by the user equipment according to the Preamble sequence number and the PRACH mask sequence number is monitored, or the second information is specifically used to indicate that the to-be-identified cell is a cell corresponding to maximum reference signal received power or best reference signal received quality that is determined by the user equipment according to the Preamble sequence number and the PRACH mask sequence number.

Optionally, the first information is specifically used to instruct the user equipment and the second network node interacts to determine, according to an SRS or a DMRS, the second information, and the second information is specifically used to indicate that the to-be-identified cell is a cell in which the SRS or the DMRS sent by the user equipment is received, or the second information is specifically used to indicate that the to-be-identified cell is a cell corresponding to maximum reference signal received power or best reference signal received quality that is obtained, by means of measurement, by the user equipment according to the SRS or the DMRS.

Optionally, the first information is specifically used to instruct the user equipment and the second network node interacts to determine, according to an identifier of a serving cell (for example, a PCI of the serving cell) of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

Optionally, the apparatus may further include a bus 905 for connecting the memory 903 and the processor 904, and an antenna 906 configured to send and receive a signal.

By applying the apparatus provided in this embodiment of the present invention, a second network node does not need to continuously broadcast system information to enable user equipment to obtain a CGI of a cell by receiving the system information broadcast by the second network node, and interaction between the user equipment and the second network node is triggered only when the foregoing cell identification apparatus needs to identify a cell reported by the user equipment, so that a to-be-identified cell reported by the user equipment can be identified, the to-be-identified cell reported by the user equipment can still be identified especially when confusion of the PCI of the cell occurs, and further, power consumption of the second network node can be reduced, and interference to a system that is increased because the second network node continuously broadcasts the system information is avoided.

FIG. 10A is a schematic structural diagram of user equipment 10 according to Embodiment 10 of the present invention. The user equipment may perform actions of the user equipment in Embodiment 1 to Embodiment 8. The user equipment includes:
a receiving unit 1001, configured to receive first information, where the first information is used to instruct the user equipment in interaction with a second network node to determine second information, the second information is used to indicate a to-be-identified cell, and the to-be-identified cell is a cell of the second network node; and
a sending unit 1002, configured to send the second information to a first network node to identify the to-be-identified cell.

Optionally, the first information is specifically used to instruct the user equipment in interaction with the second network node to determine, according to a C-RNTI corresponding to the to-be-identified cell, the second information, and the second information is specifically used to indicate that the to-be-identified cell is a cell in which the user equipment descrambles a physical downlink control channel PDCCH according to the C-RNTI and to which the user equipment sends uplink data or a downlink data feedback.

Optionally, the first information is specifically used to instruct the user equipment in interaction with the second network node to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback.

Optionally, the first information is specifically used to instruct the user equipment in interaction with the second network node to determine, according to an RS, the second information. For example, the user equipment and the second network node may determine the second information according to a parameter related to the RS, where the parameter related to the RS includes an identifier of the RS, a quantity of antenna ports of the RS, a time-frequency resource configuration of the RS, a power configuration of the RS, a scrambling configuration of the RS, sending bandwidth of the RS, a sending period of the RS, a sending start point of the RS, duration for which the RS is sent once, or the like. When the RS is used to determine the second information, the second information is specifically used to indicate that the to-be-identified cell is a cell corresponding to the RS that is obtained, by means of measurement, by the user equipment by using the parameter related to the RS, or the second information is specifically used to indicate that the to-be-identified cell is a cell corresponding to an RSTD that is determined by the user equipment by using the parameter related to the RS.

Optionally, the first information is specifically used to instruct the user equipment in interaction with the second network node to determine, according to an SS, the second information. For example, the user equipment and the second network node may determine the second information according to a parameter related to the SS, where the parameter related to the SS includes an identifier of the SS, a quantity of antenna ports of the SS, a time-frequency resource configuration of the SS, a power configuration of the SS, a scrambling configuration of the SS, sending bandwidth of the SS, a sending period of the SS, a sending start point of the SS, duration for which the SS is sent once, or the like. When the SS is used to determine the second information, the second information is specifically used to indicate that the to-be-identified cell is a cell corresponding to the SS that is obtained, by means of measurement, by the user equipment by using the parameter related to the SS, or the second information is specifically used to indicate that the to-be-identified cell is a cell corresponding to an SSTD that is determined by the user equipment by using the parameter related to the SS.

Optionally, the first information is specifically used to instruct the user equipment in interaction with the second network node to determine, according to a random access preamble (Preamble) sequence number and a PRACH mask sequence number, the second information, and the second information is specifically used to indicate that the to-be-identified cell is a cell in which a random access request initiated by the user equipment according to the Preamble sequence number and the PRACH mask sequence number is monitored, or the second information is specifically used to indicate that the to-be-identified cell is a cell corresponding to maximum reference signal received power or best reference signal received quality that is determined by the user equipment according to the Preamble sequence number and the PRACH mask sequence number.

Optionally, the first information is specifically used to instruct the user equipment in interaction with the second network node to determine, according to an SRS or a DMRS, the second information, and the second information is specifically used to indicate that the to-be-identified cell is a cell in which the SRS or the DMRS sent by the user equipment is received, or the second information is specifically used to indicate that the to-be-identified cell is a cell corresponding to maximum reference signal received power or best reference signal received quality that is obtained, by means of measurement, by the user equipment according to the SRS or the DMRS.

Optionally, the first information is specifically used to instruct the user equipment in interaction with the second network node to determine, according to an identifier of a serving cell (for example, a PCI of the serving cell) of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

FIG. 10B is another schematic structural diagram of the user equipment 10 according to Embodiment 10 of the present invention. The user equipment includes:
a memory 1003, configured to store computer code, where the computer code includes:
   receiving first information, where the first information is used to instruct the user equipment and a second network node to determine second information, the second information is used to indicate a to-be-identified cell, and the to-be-identified cell is a cell of the second network node; and sending the second information to a first network node to identify the to-be-identified cell; and
   a processor 1004, configured to execute the computer code stored in the memory 1003.

Optionally, in the foregoing computer code, the first information is specifically used to instruct the user equipment in interaction with the second network node to determine, according to a C-RNTI corresponding to the to-be-identified cell, the second information, and the second information is specifically used to indicate that the to-be-identified cell is a cell in which the user equipment descrambles a physical downlink control channel PDCCH according to the C-RNTI and to which the user equipment sends uplink data or a downlink data feedback.

Optionally, the first information is specifically used to instruct the user equipment in interaction with the second network node to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback.

Optionally, the first information is specifically used to instruct the user equipment in interaction with the second network node to determine, according to an RS, the second information. For example, the user equipment and the second network node may determine the second information according to a parameter related to the RS, where the parameter related to the RS includes an identifier of the RS, a quantity of antenna ports of the RS, a time-frequency resource configuration of the RS, a power configuration of the RS, a scrambling configuration of the RS, sending bandwidth of the RS, a sending period of the RS, a sending start point of the RS, duration for which the RS is sent once, or the like. When the RS is used to determine the second information, the second information is specifically used to indicate that the to-be-identified cell is a cell corresponding to the RS that is obtained, by means of measurement, by the user equipment by using the parameter related to the RS, or the second information is specifically used to indicate that the to-be-identified cell is a cell corresponding to an RSTD that is determined by the user equipment by using the parameter related to the RS.

Optionally, the first information is specifically used to instruct the user equipment in interaction with the second network node to determine, according to an SS, the second information. For example, the user equipment and the second network node may determine the second information according to a parameter related to the SS, where the parameter related to the SS includes an identifier of the SS, a quantity of antenna ports of the SS, a time-frequency resource configuration of the SS, a power configuration of the SS, a scrambling configuration of the SS, sending bandwidth of the SS, a sending period of the SS, a sending start point of the SS, duration for which the SS is sent once, or the like. When the SS is used to determine the second information, the second information is specifically used to indicate that the to-be-identified cell is a cell corresponding to the SS that is obtained, by means of measurement, by the user equipment by using the parameter related to the SS, or the second information is specifically used to indicate that the to-be-identified cell is a cell corresponding to an SSTD that is determined by the user equipment by using the parameter related to the SS.

Optionally, the first information is specifically used to instruct the user equipment in interaction with the second network node to determine, according to a random access preamble (Preamble) sequence number and a PRACH mask sequence number, the second information, and the second information is specifically used to indicate that the to-be-identified cell is a cell in which a random access request initiated by the user equipment according to the Preamble sequence number and the PRACH mask sequence number is monitored, or the second information is specifically used to indicate that the to-be-identified cell is a cell corresponding to maximum reference signal received power or best reference signal received quality that is determined by the user equipment according to the Preamble sequence number and the PRACH mask sequence number.

Optionally, the first information is specifically used to instruct the user equipment in interaction with the second network node to determine, according to an SRS or a DMRS, the second information, and the second information is specifically used to indicate that the to-be-identified cell is a cell in which the SRS or the DMRS sent by the user equipment is received, or the second information is specifically used to indicate that the to-be-identified cell is a cell corresponding to maximum reference signal received power or best reference signal received quality that is obtained, by means of measurement, by the user equipment according to the SRS or the DMRS.

Optionally, the first information is specifically used to instruct the user equipment in interaction with the second network node to determine, according to an identifier of a serving cell (for example, a PCI of the serving cell) of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

Optionally, the user equipment may further include a bus 1005 for connecting the memory 1003 and the processor 1004, and an antenna 1006 configured to send and receive a signal.

By applying the user equipment provided in Embodiment 10 of the present invention, a second network node does not need to continuously broadcast system information to enable the user equipment to obtain a CGI of a cell by receiving the system information broadcast by the second network node, and interaction between the user equipment and the second network node is triggered only when a first network node needs to identify a cell reported by the user equipment, so that a to-be-identified cell reported by the user equipment can be identified, the to-be-identified cell reported by the user equipment can still be identified especially when confusion of the PCI of the cell occurs, and further, power consumption of the second network node can be reduced, and interference to a system that is increased because the second network node continuously broadcasts the system information is avoided.

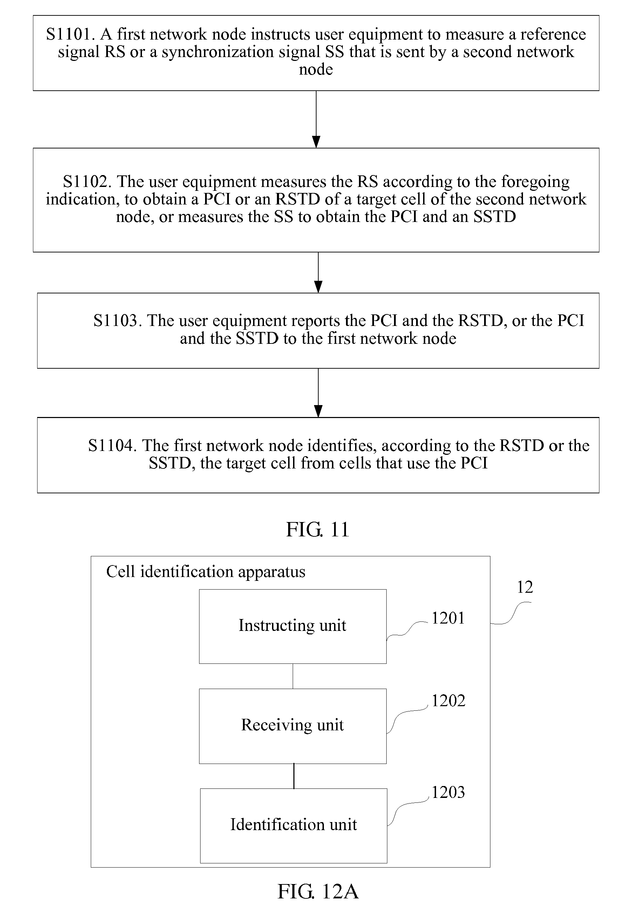

Embodiment 11 of the present invention provides a schematic flowchart of a cell identification method. As shown in FIG. 11, the method includes the following content.

S1101. A first network node instructs user equipment to measure a reference signal RS or a synchronization signal SS that is sent by a second network node.

S1102. The user equipment measures the RS according to the foregoing indication, to obtain a PCI or an RSTD of a to-be-identified cell of the second network node, or measures the SS to obtain the PCI and an SSTD.

Specifically, the user equipment may acquire a frame start time of a serving cell from the serving cell, and measure the RS or the SS sent by the second network node, to acquire a frame start time of the to-be-identified cell of the second network node, where the RSTD or the SSTD is a difference between the frame start time of the serving cell and the frame start time of the to-be-identified cell.

S1103. The user equipment reports the PCI and the RSTD, or the PCI and the SSTD to the first network node.

S1104. The first network node identifies, according to the RSTD or the SSTD, the to-be-identified cell from cells that use the PCI.

Specifically, the first network node may negotiate with cells that use a same PCI, to ensure that RSTDs of the cells having the same PCI are different, and the first network node can identify the to-be-identified cell by receiving the PCI and the RSTD that are reported by the user equipment.

FIG. 12A is a schematic structural diagram of a cell identification apparatus 12 according to Embodiment 12 of the present invention. The apparatus may be a first network node, and perform actions performed by the first network node in Embodiment 11. The apparatus includes:
an instructing unit 1201, configured to instruct the user equipment to measure a reference signal RS or a synchronization signal SS that is sent by a second network node;
a receiving unit 1202, configured to receive a physical cell identifier PCI and a reference signal time difference RSTD that are obtained by the user equipment by measuring the RS, or measure the SS to acquire the PCI and an SSTD; and
an identification unit 1203, configured to identify, according to the RSTD or the SSTD, a to-be-identified cell from cells that use the PCI, where the to-be-identified cell is a cell of the second network node.

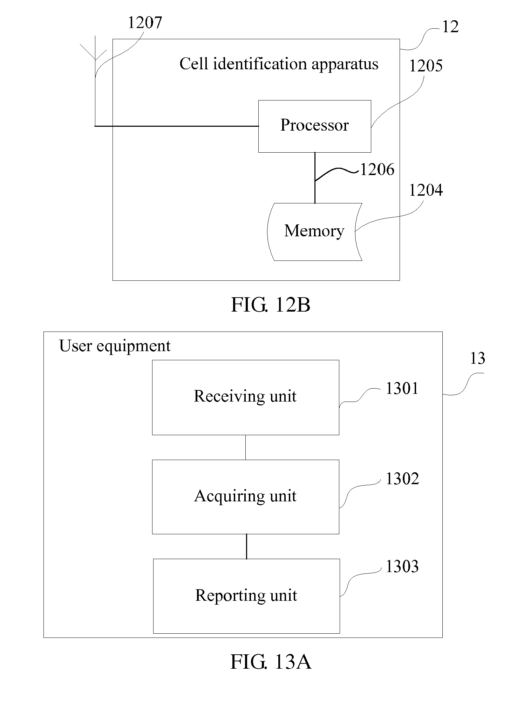

FIG. 12B is another schematic structural diagram of the cell identification apparatus 12 according to Embodiment 12 of the present invention. The apparatus may be a first network node, and perform actions performed by the first network node in Embodiment 11. The apparatus includes:
a memory 1204, configured to store computer code, where the computer code includes:
   instructing the user equipment to measure a reference signal RS or a synchronization signal SS that is sent by a second network node; receiving a physical cell identifier PCI and a reference signal time difference RSTD that are obtained by the user equipment by measuring the RS, or measuring the SS to acquire the PCI and an SSTD; and identifying, according to the RSTD or the SSTD, a to-be-identified cell from cells that use the PCI, where the to-be-identified cell is a cell of the second network node; and
   a processor 1205, configured to execute the computer code stored in the memory 1204.

Optionally, the cell identification apparatus may further include a bus 1206 for connecting the memory 1204 and the processor 1205, and an antenna 1207 configured to send and receive a signal.

FIG. 13A is a schematic structural diagram of user equipment 13 according to Embodiment 13 of the present invention. The user equipment may perform actions performed by the user equipment in Embodiment 11. The user equipment includes:
a receiving unit 1301, configured to receive an indication message sent by a first network node, where the indication message is used to instruct the user equipment to measure a reference signal RS or a synchronization signal SS that is sent by a second network node;
an acquiring unit 1302, configured to measure the RS sent by the second network node, and obtain a PCI or an RSTD of a to-be-identified cell in which the user equipment is located, or measure the SS to obtain the PCI or an SSTD; and
a reporting unit 1303, configured to report the RSTD or the SSTD to the first network node, so that the first network node identifies, according to the RSTD or the SSTD, the to-be-identified cell in which the user equipment is located from cells that use the PCI, where the to-be-identified cell is a cell of the second network node.

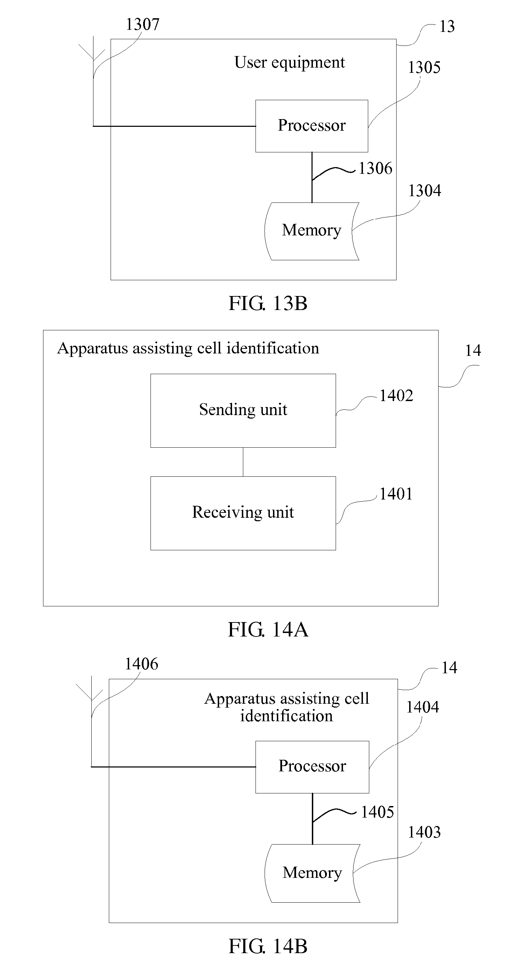

FIG. 13B is another schematic structural diagram of the user equipment according to Embodiment 13 of the present invention. The user equipment may perform actions performed by the user equipment in Embodiment 11. The user equipment includes:
a memory 1304, configured to store computer code, where the computer code includes:
   receiving an indication message sent by a first network node, where the indication message is used to instruct the user equipment to measure a reference signal RS or a synchronization signal SS that is sent by a second network node; measuring the RS sent by the second network node, and obtaining a PCI or an RSTD of a to-be-identified cell in which the user equipment is located, or measuring the SS to obtain the PCI or an SSTD; and reporting the RSTD or the SSTD to the first network node, so that the first network node identifies, according to the RSTD or the SSTD, the to-be-identified cell in which the user equipment is located from cells that use the PCI, where the to-be-identified cell is a cell of the second network node; and
   a processor 1305, configured to execute the computer code stored in the memory 1304.

Optionally, the user equipment further includes a bus 1306 for connecting the memory 1304 and the processor 1304, and an antenna 1307 configured to send and receive a signal.

By applying the method provided in Embodiment 11 of the present invention, the apparatus provided in Embodiment 12 of the present invention, and the user equipment provided in Embodiment 13 of the present invention, a second network node does not need to continuously broadcast system information to enable the user equipment to obtain a CGI of a cell by receiving the system information broadcast by the second network node, and interaction between the user equipment and the second network node is triggered only when a first network node needs to identify a cell reported by the user equipment, so that a to-be-identified cell reported by the user equipment can be identified, the to-be-identified cell reported by the user equipment can still be identified especially when confusion of the PCI of the cell occurs, and further, power consumption of the second network node can be reduced, and interference to a system that is increased because the second network node continuously broadcasts the system information is avoided.

Embodiment 14 of the present invention provides an apparatus 14 assisting cell identification. The apparatus may be the second network node in any one of Embodiment 1 of the present invention to Embodiment 8 of the present invention, and perform actions performed by the second network node. FIG. 14A is a schematic structural diagram according to Embodiment 14 of the present invention. The apparatus includes:
a receiving unit 1401, configured to receive first information, where the first information is used to instruct user equipment and the apparatus interacts to determine second information, the second information is used to indicate a to-be-identified cell, and the to-be-identified cell is a cell of the second network node; and
a sending unit 1402, configured to send the second information determined by the user equipment and the apparatus to a first network node to identify the to-be-identified cell.

Optionally, the first information is specifically used to instruct the user equipment and the second network node interacts to determine, according to a C-RNTI corresponding to the to-be-identified cell, the second information, and the second information is specifically used to indicate that the to-be-identified cell is a cell in which the user equipment descrambles a physical downlink control channel PDCCH according to the C-RNTI and to which the user equipment sends uplink data or a downlink data feedback.

Optionally, the first information is specifically used to instruct the user equipment and the second network node interacts to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback.

Optionally, the first information is specifically used to instruct the user equipment and the second network node interacts to determine, according to an RS, the second information. For example, the user equipment and the second network node may determine the second information according to a parameter related to the RS, where the parameter related to the RS includes an identifier of the RS, a quantity of antenna ports of the RS, a time-frequency resource configuration of the RS, a power configuration of the RS, a scrambling configuration of the RS, sending bandwidth of the RS, a sending period of the RS, a sending start point of the RS, duration for which the RS is sent once, or the like. When the RS is used to determine the second information, the second information is specifically used to indicate that the to-be-identified cell is a cell corresponding to the RS that is obtained, by means of measurement, by the user equipment by using the parameter related to the RS, or the second information is specifically used to indicate that the to-be-identified cell is a cell corresponding to an RSTD that is determined by the user equipment by using the parameter related to the RS.

Optionally, the first information is specifically used to instruct the user equipment and the second network node interacts to determine, according to an SS, the second information. For example, the user equipment and the second network node may determine the second information according to a parameter related to the SS, where the parameter related to the SS includes an identifier of the SS, a quantity of antenna ports of the SS, a time-frequency resource configuration of the SS, a power configuration of the SS, a scrambling configuration of the SS, sending bandwidth of the SS, a sending period of the SS, a sending start point of the SS, duration for which the SS is sent once, or the like. When the SS is used to determine the second information, the second information is specifically used to indicate that the to-be-identified cell is a cell corresponding to the SS that is obtained, by means of measurement, by the user equipment by using the parameter related to the SS, or the second information is specifically used to indicate that the to-be-identified cell is a cell corresponding to an SSTD that is determined by the user equipment by using the parameter related to the SS.

Optionally, the first information is specifically used to instruct the user equipment and the second network node interacts to determine, according to a random access preamble (Preamble) sequence number and a PRACH mask sequence number, the second information, and the second information is specifically used to indicate that the to-be-identified cell is a cell in which a random access request initiated by the user equipment according to the Preamble sequence number and the PRACH mask sequence number is monitored, or the second information is specifically used to indicate that the to-be-identified cell is a cell corresponding to maximum reference signal received power or best reference signal received quality that is determined by the user equipment according to the Preamble sequence number and the PRACH mask sequence number.

Optionally, the first information is specifically used to instruct the user equipment and the second network node interacts to determine, according to an SRS or a DMRS, the second information, and the second information is specifically used to indicate that the to-be-identified cell is a cell in which the SRS or the DMRS sent by the user equipment is received, or the second information is specifically used to indicate that the to-be-identified cell is a cell corresponding to maximum reference signal received power or best reference signal received quality that is obtained, by means of measurement, by the user equipment according to the SRS or the DMRS.

Optionally, the first information is specifically used to instruct the user equipment and the second network node interacts to determine, according to an identifier of a serving cell (for example, a PCI of the serving cell) of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

FIG. 14B is a schematic structural diagram of another implementation manner according to Embodiment 14 of the present invention. The apparatus 14 includes:
a memory 1403, configured to store computer code, where the computer code includes:
   receiving first information, where the first information is used to instruct user equipment and the apparatus to determine second information, the second information is used to indicate a to-be-identified cell, and the to-be-identified cell is a cell of the second network node; and sending the second information determined by the user equipment and the apparatus to a first network node to identify the to-be-identified cell; and
   a processor 1404, configured to execute the computer code stored in the memory 1403.

Optionally, in the foregoing computer code, the first information is specifically used to instruct the user equipment and the second network node to determine, according to a C-RNTI corresponding to the to-be-identified cell, the second information, and the second information is specifically used to indicate that the to-be-identified cell is a cell in which the user equipment descrambles a physical downlink control channel PDCCH according to the C-RNTI and to which the user equipment sends uplink data or a downlink data feedback.

Optionally, the first information is specifically used to instruct the user equipment and the second network node interacts to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback.

Optionally, the first information is specifically used to instruct the user equipment and the second network node interacts to determine, according to an RS, the second information. For example, the user equipment and the second network node may determine the second information according to a parameter related to the RS, where the parameter related to the RS includes an identifier of the RS, a quantity of antenna ports of the RS, a time-frequency resource configuration of the RS, a power configuration of the RS, a scrambling configuration of the RS, sending bandwidth of the RS, a sending period of the RS, a sending start point of the RS, duration for which the RS is sent once, or the like. When the RS is used to determine the second information, the second information is specifically used to indicate that the to-be-identified cell is a cell corresponding to the RS that is obtained, by means of measurement, by the user equipment by using the parameter related to the RS, or the second information is specifically used to indicate that the to-be-identified cell is a cell corresponding to an RSTD that is determined by the user equipment by using the parameter related to the RS.

Optionally, the first information is specifically used to instruct the user equipment and the second network node interacts to determine, according to an SS, the second information. For example, the user equipment and the second network node may determine the second information according to a parameter related to the SS, where the parameter related to the SS includes an identifier of the SS, a quantity of antenna ports of the SS, a time-frequency resource configuration of the SS, a power configuration of the SS, a scrambling configuration of the SS, sending bandwidth of the SS, a sending period of the SS, a sending start point of the SS, duration for which the SS is sent once, or the like. When the SS is used to determine the second information, the second information is specifically used to indicate that the to-be-identified cell is a cell corresponding to the SS that is obtained, by means of measurement, by the user equipment by using the parameter related to the SS, or the second information is specifically used to indicate that the to-be-identified cell is a cell corresponding to an SSTD that is determined by the user equipment by using the parameter related to the SS.

Optionally, the first information is specifically used to instruct the user equipment and the second network node interacts to determine, according to a random access preamble (Preamble) sequence number and a PRACH mask sequence number, the second information, and the second information is specifically used to indicate that the to-be-identified cell is a cell in which a random access request initiated by the user equipment according to the Preamble sequence number and the PRACH mask sequence number is monitored, or the second information is specifically used to indicate that the to-be-identified cell is a cell corresponding to maximum reference signal received power or best reference signal received quality that is determined by the user equipment according to the Preamble sequence number and the PRACH mask sequence number.

Optionally, the first information is specifically used to instruct the user equipment and the second network node interacts to determine, according to an SRS or a DMRS, the second information, and the second information is specifically used to indicate that the to-be-identified cell is a cell in which the SRS or the DMRS sent by the user equipment is received, or the second information is specifically used to indicate that the to-be-identified cell is a cell corresponding to maximum reference signal received power or best reference signal received quality that is obtained, by means of measurement, by the user equipment according to the SRS or the DMRS.

Optionally, the first information is specifically used to instruct the user equipment and the second network node interacts to determine, according to an identifier of a serving cell (for example, a PCI of the serving cell) of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

Optionally, the foregoing apparatus 14 may further include a bus 1405 for connecting the memory 1403 and the processor 1404, and an antenna 1406 configured to send and receive a signal.

By applying the apparatus provided in Embodiment 14 of the present invention, the apparatus does not need to continuously broadcast system information to enable user equipment to obtain a CGI of a cell by receiving the system information broadcast by the apparatus, and interaction between the user equipment and the apparatus is triggered only when a first network node needs to identify a cell reported by the user equipment, so that a to-be-identified cell reported by the user equipment can be identified, the to-be-identified cell reported by the user equipment can still be identified especially when confusion of the PCI of the cell occurs, and further, power consumption of the apparatus can be reduced, and interference to a system that is increased because the apparatus continuously broadcasts the system information is avoided.

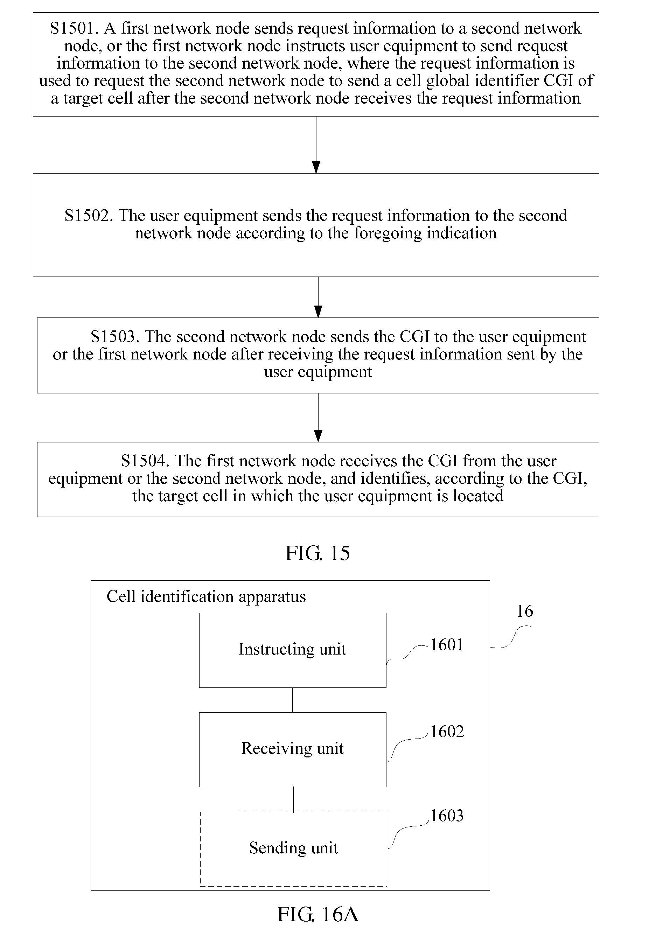

FIG. 15 is a schematic flowchart of a cell identification method according to Embodiment 15 of the present invention. The method includes the following content.

S1501. A first network node sends request information to a second network node, or the first network node instructs user equipment to send request information to the second network node, where the request information is used to request the second network node to send a cell global identifier CGI of a to-be-identified cell after the second network node receives the request information.

S1502. The user equipment sends the request information to the second network node according to the foregoing indication.

S1503. The second network node sends the CGI to the user equipment or the first network node after receiving the request information sent by the user equipment.

S1504. The first network node receives the CGI from the user equipment or the second network node, and identifies, according to the CGI, the to-be-identified cell in which the user equipment is located.

Note: The CGI in the foregoing embodiment may be a PCI or a PSC.

Embodiment 16 of the present invention provides a cell identification apparatus 16, which may be the first network node in Embodiment 15 of the present invention and perform actions performed by the first network node. FIG. 16A is a schematic structural diagram of the cell identification apparatus according to Embodiment 16 of the present invention. The apparatus includes: an instructing unit 1601 and a receiving unit 1602, or a sending unit 1603 and a receiving unit 1602, where
the instructing unit 1601 is configured to instruct user equipment to send request information to a second network node, where the request information is used to request the second network node to send a cell global identifier CGI of a to-be-identified cell in which the user equipment is located after the second network node receives the request information;
the receiving unit 1602 is configured to receive the CGI, and identify, according to the CGI, the to-be-identified cell in which the user equipment is located, where the second network node serves the to-be-identified cell, and the cell identification apparatus is a service communication node of a serving cell in which the user equipment is located; and
the sending unit 1603 is configured to send the request information to the second network node.

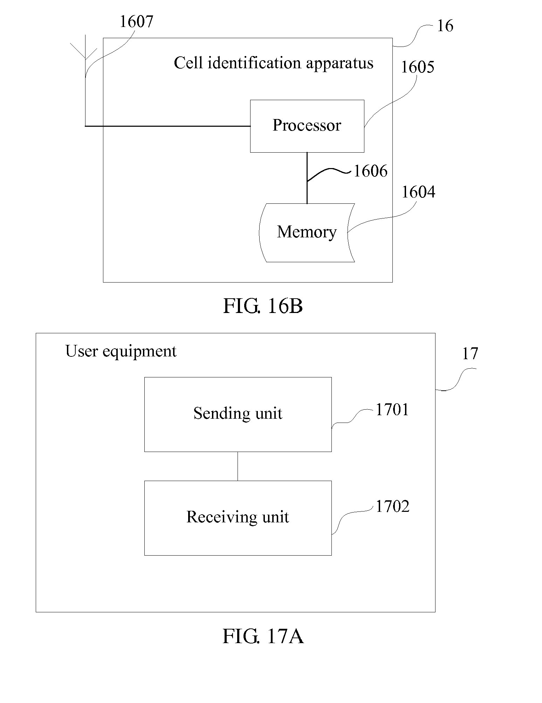

FIG. 16B is another possible implementation manner of the cell identification apparatus according to Embodiment 16 of the present invention. The apparatus includes:
a memory 1604, configured to store computer code, where the code includes:
   sending request information to a second network node, or instructing, by the first network node, user equipment to send request information to the second network node, where the request information is used to request the second network node to send a cell global identifier CGI of a to-be-identified cell after the second network node receives the request information; and
   a processor 1605, configured to execute the computer code stored in the memory.

Optionally, the foregoing apparatus 16 may further include a bus 1606 for connecting the memory 1604 and the processor 1605, and an antenna 1607 configured to send and receive a signal.

Embodiment 17 of the present invention provides user equipment 17. The user equipment may perform actions performed by the user equipment in Embodiment 15. FIG. 17A is a schematic structural diagram of a possible implementation manner of the user equipment. The user equipment includes:
a sending unit 1701, configured to send request information to a second network node, where the request information is used to request the second network node to send a cell global identifier CGI corresponding to a to-be-identified cell in which the user equipment is located after the second network node receives the request information; and
a receiving unit 1702, configured to receive the CGI, and send the CGI to a first network node, so that the first network node identifies the to-be-identified cell according to the CGI.

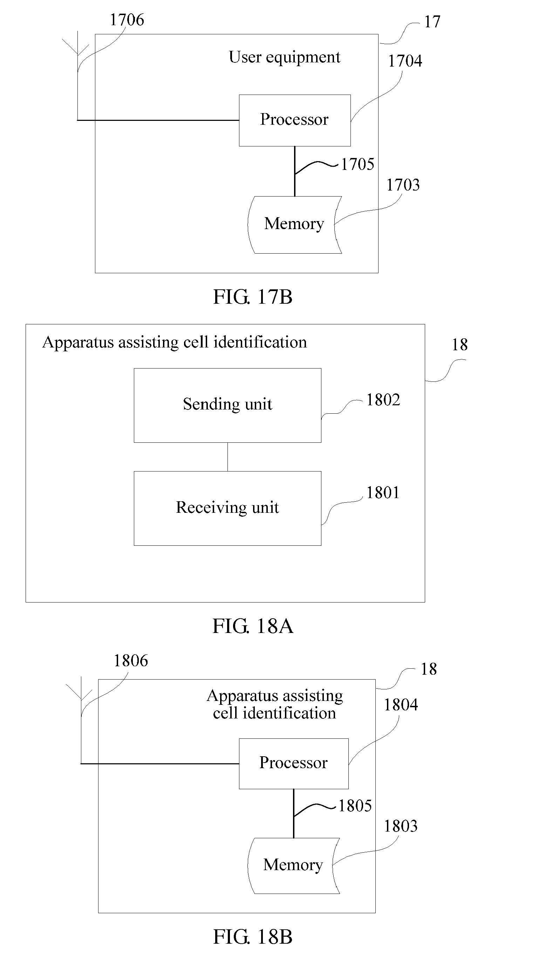

FIG. 17B is a schematic structural diagram of another possible implementation manner of the user equipment. The user equipment includes:
a memory 1703, configured to store computer code, where the computer code includes:
   sending request information to a second network node, where the request information is used to request the second network node to send a CGI corresponding to a to-be-identified cell in which the user equipment is located after the second network node receives the request information; and receive the CGI, and send the CGI to a first network node, so that the first network node identifies, according to the CGI, the to-be-identified cell in which the user equipment is located; and
   a processor 1704, configured to execute the computer code stored in the foregoing memory 1703.

Optionally, the foregoing apparatus 17 may further include a bus 1705 for connecting the memory 1703 and the processor 1704, and an antenna 1706 configured to send and receive a signal.

Embodiment 18 of the present invention provides an apparatus assisting cell identification. The apparatus may be the second network node in Embodiment 15, and may perform actions performed by the second network node. FIG. 18A is a schematic structural diagram of a possible implementation manner of the apparatus. The apparatus includes:
a receiving unit 1801, configured to receive request information sent by user equipment, where the request information is used to request the apparatus to send a CGI corresponding to a to-be-identified cell in which the user equipment is located after the apparatus receives the request information; and
a sending unit 1802, configured to send the CGI to the user equipment according to the request information, so that the first network node identifies the to-be-identified cell according to the CGI received from the user equipment.

FIG. 18B is a schematic structural diagram of another possible implementation manner of the apparatus. The apparatus includes:
a memory 1803, configured to store computer code, where the computer code includes:
   receiving request information sent by user equipment, where the request information is used to request the apparatus to send a cell global identifier CGI corresponding to a to-be-identified cell in which the user equipment is located after the apparatus receives the request information; and sending the CGI to a first network node according to the request information, so that the first network node identifies the to-be-identified cell according to the CGI; and
   a processor 1804, configured to execute the computer code stored in the memory 1803.

Optionally, the foregoing apparatus 18 may further include a bus 1805 for connecting the memory 1803 and the processor 1804, and an antenna 1806 configured to send and receive a signal.

By applying the method provided in Embodiment 15 of the present invention and the apparatus provided in Embodiments 16, 17, and 18, a second network node does not need to continuously broadcast system information to enable user equipment to obtain a CGI of a cell by receiving the system information broadcast by the second network node, and interaction between the user equipment and the apparatus is triggered only when a first network node needs to identify a cell reported by the user equipment, so that a to-be-identified cell reported by the user equipment can be identified, the to-be-identified cell reported by the user equipment can still be identified especially when confusion of the PCI of the cell occurs, and further, power consumption of the second network node can be reduced, and interference to a system that is increased because the second network apparatus continuously broadcasts the system information is avoided.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of corresponding technical solutions to depart from the scope of the technical solutions of the embodiments of the present invention.

## Claims

1. A cell identification method, comprising:
sending, by a first network node, first information to user equipment and a second network node, wherein the first information is used to instruct the user equipment and the second network node interacts to determine second information, the second information is used to indicate a to-be-identified cell, and the to-be-identified cell is a cell of the second network node; and
receiving, by the first network node, the second information from the user equipment or the second network node, and identifying the to-be-identified cell according to the second information.

2. The method according to claim 1, wherein
the first information is specifically used to instruct the user equipment and the second network node interacts to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback; or
the first information is specifically used to instruct the user equipment and the second network node interacts to determine, according to a reference signal RS, the second information, and the second information is specifically used to indicate that the to-be-identified cell is a cell corresponding to the RS received by the user equipment, or the second information is specifically used to indicate that the to-be-identified cell is a cell corresponding to a reference signal time difference RSTD of the RS received by the user equipment; or
the first information is specifically used to instruct the user equipment and the second network node interacts to determine, according to a synchronization signal SS, the second information, and the second information is specifically used to indicate that the to-be-identified cell is a cell corresponding to the SS received by the user equipment, or the second information is specifically used to indicate that the to-be-identified cell is a cell corresponding to a synchronization signal time difference SSTD of the SS received by the user equipment; or
the first information is specifically used to instruct the user equipment and the second network node interacts to determine, according to a random access preamble Preamble sequence number and a physical random access channel PRACH mask sequence number, the second information, and the second information is specifically used to indicate that the to-be-identified cell is a cell in which a random access request that is sent by the user equipment according to the Preamble sequence number and the PRACH mask sequence number is received; or
the first information is specifically used to instruct the user equipment and the second network node interacts to determine, according to a sounding reference signal SRS or a demodulation reference signal DMRS, the second information, and the second information is specifically used to indicate that the to-be-identified cell is a cell in which the SRS or the DMRS sent by the user equipment is received; or
the first information is specifically used to instruct the user equipment and the second network node interacts to determine, according to an identifier of a serving cell of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

3. A cell identification method, comprising:
instructing, by a first network node, the user equipment to measure a reference signal RS or a synchronization signal SS that is sent by a second network node;
receiving, by the first network node, a cell identifier and a reference signal time difference RSTD that are obtained by the user equipment by measuring the RS, or receiving, by the first network node, the cell identifier or a synchronization signal time difference SSTD that is obtained by the user equipment by measuring the SS; and
identifying, by the first network node, a to-be-identified cell according to the cell identifier and the RSTD or according to the cell identifier and the SSTD, wherein the to-be-identified cell is a cell of the second network node.

4. A cell identification method, comprising:
sending, by a first network node, request information to a second network node, or instructing, by the first network node, user equipment to send request information to the second network node, wherein the request information is used to request the second network node to send a cell global identifier CGI of a to-be-identified cell after the second network node receives the request information; and
receiving, by the first network node, the CGI, and identifying the to-be-identified cell according to the CGI, wherein the to-be-identified cell is a cell of the second network node.

5. A cell identification method, comprising:
receiving, by user equipment, first information, wherein the first information is used to instruct the user equipment in interaction with a second network node to determine second information, the second information is used to indicate a to-be-identified cell, and the to-be-identified cell is a cell of the second network node; and
sending, by the user equipment, the second information to a first network node to identify the to-be-identified cell.

6. The method according to claim 5, wherein
the first information is specifically used to instruct the user equipment in interaction with the second network node to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback; or
the first information is specifically used to instruct the user equipment in interaction with the second network node to determine, according to a reference signal RS, the second information, and the second information is specifically used to indicate that the to-be-identified cell is a cell corresponding to the RS received by the user equipment, or that the to-be-identified cell is a cell corresponding to a reference signal time difference RSTD of the RS received by the user equipment; or
the first information is specifically used to instruct the user equipment in interaction with the second network node to determine, according to a synchronization signal SS, the second information, and the second information is specifically used to indicate that the to-be-identified cell is a cell corresponding to the SS received by the user equipment, or the second information is specifically used to indicate that the to-be-identified cell is a cell corresponding to a synchronization signal time difference SSTD of the SS received by the user equipment; or
the first information is specifically used to instruct the user equipment in interaction with the second network node to determine, according to a random access preamble Preamble sequence number and a physical random access channel PRACH mask sequence number, the second information, and the second information is specifically used to indicate that the to-be-identified cell is a cell in which a random access request that is sent by the user equipment according to the Preamble sequence number and the PRACH mask sequence number is received; or
the first information is specifically used to instruct the user equipment in interaction with the second network node to determine, according to a sounding reference signal SRS or a demodulation reference signal DMRS, the second information, and the second information is specifically used to indicate that the to-be-identified cell is a cell in which the SRS or the DMRS sent by the user equipment is received; or
the first information is specifically used to instruct the user equipment in interaction with the second network node to determine, according to an identifier of a serving cell of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

7. A cell identification method, comprising:
receiving, by user equipment, an indication message sent by a first network node, wherein the indication message is used to instruct the user equipment to measure a reference signal RS or a synchronization signal SS that is sent by a second network node;
measuring, by the user equipment, the RS sent by the second network node, to obtain a cell identifier and a reference signal time difference RSTD of the RS, or measuring, by the user equipment, the SS sent by the second network node, to obtain a cell identifier and a synchronization signal time difference SSTD of the SS; and
reporting, by the user equipment, the cell identifier and the RSTD, or the cell identifier and the SSTD to the first network node, so that the first network node identifies a to-be-identified cell according to the cell identifier and the RSTD or according to the cell identifier and the SSTD, wherein the to-be-identified cell is a cell of the second network node.

8. A cell identification method, comprising:
sending, by user equipment, request information to a second network node, wherein the request information is used to request the second network node to send a cell global identifier CGI of a to-be-identified cell after the second network node receives the request information; and
receiving, by the user equipment, the CGI, and sending the CGI to the first network node, so that the first network node identifies the to-be-identified cell according to the CGI, wherein the to-be-identified cell is a cell of the second network node.

9. A cell identification method, comprising:
receiving, by a second network node, first information, wherein the first information is used to instruct the second network node in interaction with user equipment to determine second information, the second information is used to indicate a to-be-identified cell, and the to-be-identified cell is a cell of the second network node; and
sending, by the second network node, the second information to a first network node to identify the to-be-identified cell.

10. The method according to claim 9, wherein
the first information is specifically used to instruct the second network node in interaction with the user equipment to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback; or
the first information is specifically used to instruct the second network node in interaction with the user equipment to determine, according to a reference signal RS, the second information, and the second information is specifically used to indicate that the to-be-identified cell is a cell corresponding to the RS received by the user equipment, or that the to-be-identified cell is a cell corresponding to a reference signal time difference RSTD of the RS received by the user equipment; or
the first information is specifically used to instruct the second network node in interaction with the user equipment to determine, according to a synchronization signal SS, the second information, and the second information is specifically used to indicate that the to-be-identified cell is a cell corresponding to the SS received by the user equipment, or the second information is specifically used to indicate that the to-be-identified cell is a cell corresponding to a synchronization signal time difference SSTD of the SS received by the user equipment; or
the first information is specifically used to instruct the second network node in interaction with the user equipment to determine, according to a random access preamble Preamble sequence number and a physical random access channel PRACH mask sequence number, the second information, and the second information is specifically used to indicate that the to-be-identified cell is a cell in which a random access request that is sent by the user equipment according to the Preamble sequence number and the PRACH mask sequence number is received; or
the first information is specifically used to instruct the second network node in interaction with the user equipment to determine, according to a sounding reference signal SRS or a demodulation reference signal DMRS, the second information, and the second information is specifically used to indicate that the to-be-identified cell is a cell in which the SRS or the DMRS sent by the user equipment is received; or
the first information is specifically used to instruct the second network node in interaction with the user equipment to determine, according to an identifier of a serving cell of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

11. A cell identification method, comprising:
receiving, by a second network node, request information sent by user equipment or a first network node, wherein the request information is used to request the second network node to send a cell global identifier CGI of a to-be-identified cell after the second network node receives the request information; and
sending, by the second network node, the CGI to the user equipment according to the request information, so that the first network node identifies the to-be-identified cell according to the CGI received from the user equipment, wherein the to-be-identified cell is a cell of the second network node.

12. A cell identification apparatus, comprising:
a sending unit, configured to send first information to user equipment and a second network node, wherein the first information is used to instruct the user equipment and the second network node to perform interaction to determine second information, the second information is used to indicate a to-be-identified cell, and the to-be-identified cell is a cell of the second network node; and
a receiving unit, configured to receive the second information from the user equipment or the second network node, and identify the to-be-identified cell according to the second information.

13. The apparatus according to claim 12, wherein
the first information is specifically used to instruct the user equipment and the second network node interacts to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback; or
the first information is specifically used to instruct the user equipment and the second network node interacts to determine, according to a reference signal RS, the second information, and the second information is specifically used to indicate that the to-be-identified cell is a cell corresponding to the RS received by the user equipment, or that the to-be-identified cell is a cell corresponding to a reference signal time difference RSTD of the RS received by the user equipment; or
the first information is specifically used to instruct the user equipment and the second network node interacts to determine, according to a synchronization signal SS, the second information, and the second information is specifically used to indicate that the to-be-identified cell is a cell corresponding to the SS received by the user equipment, or the second information is specifically used to indicate that the to-be-identified cell is a cell corresponding to a synchronization signal time difference SSTD of the SS received by the user equipment; or
the first information is specifically used to instruct the user equipment and the second network node interacts to determine, according to a random access preamble Preamble sequence number and a physical random access channel PRACH mask sequence number, the second information, and the second information is specifically used to indicate that the to-be-identified cell is a cell in which a random access request that is sent by the user equipment according to the Preamble sequence number and the PRACH mask sequence number is received; or
the first information is specifically used to instruct the user equipment and the second network node interacts to determine, according to a sounding reference signal SRS or a demodulation reference signal DMRS, the second information, and the second information is specifically used to indicate that the to-be-identified cell is a cell in which the SRS or the DMRS sent by the user equipment is received; or
the first information is specifically used to instruct the user equipment and the second network node interacts to determine, according to an identifier of a serving cell of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

14. A cell identification apparatus, comprising:
an instructing unit, configured to instruct the user equipment to measure a reference signal RS or a synchronization signal SS that is sent by a second network node;
a receiving unit, configured to receive a cell identifier and a reference signal time difference RSTD that are obtained by the user equipment by measuring the RS, or configured to receive the cell identifier or a synchronization signal time difference SSTD that is obtained by the user equipment by measuring the SS; and
an identification unit, configured to identify a to-be-identified cell according to the cell identifier and the RSTD or according to the cell identifier and the SSTD, wherein the to-be-identified cell is a cell of the second network node.

15. A cell identification apparatus, comprising: an instructing unit and a receiving unit, or a sending unit and the receiving unit, wherein
the instructing unit is configured to instruct user equipment to send request information to a second network node, wherein the request information is used to request the second network node to send a cell global identifier CGI of a to-be-identified cell in which the user equipment is located after the second network node receives the request information;
the sending unit is configured to send the request information to the second network node; and the receiving unit is configured to receive the CGI, and identify the to-be-identified cell according to the CGI, wherein the to-be-identified cell is a cell of the second network node.

16. User equipment, comprising:
a receiving unit, configured to receive first information, wherein the first information is used to instruct the user equipment in interaction with a second network node to determine second information, the second information is used to indicate a to-be-identified cell, and the to-be-identified cell is a cell of the second network node; and
a sending unit, configured to send the second information to a first network node to identify the to-be-identified cell.

17. The user equipment according to claim 16, wherein
the first information is specifically used to instruct the user equipment in interaction with the second network node to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback; or
the first information is specifically used to instruct the user equipment in interaction with the second network node to determine, according to a reference signal RS, the second information, and the second information is specifically used to indicate that the to-be-identified cell is a cell corresponding to the RS received by the user equipment, or that the to-be-identified cell is a cell corresponding to a reference signal time difference RSTD of the RS received by the user equipment; or
the first information is specifically used to instruct the user equipment in interaction with the second network node to determine, according to a synchronization signal SS, the second information, and the second information is specifically used to indicate that the to-be-identified cell is a cell corresponding to the SS received by the user equipment, or the second information is specifically used to indicate that the to-be-identified cell is a cell corresponding to a synchronization signal time difference SSTD of the SS received by the user equipment; or
the first information is specifically used to instruct the user equipment in interaction with the second network node to determine, according to a random access preamble Preamble sequence number and a physical random access channel PRACH mask sequence number, the second information, and the second information is specifically used to indicate that the to-be-identified cell is a cell in which a random access request that is sent by the user equipment according to the Preamble sequence number and the PRACH mask sequence number is received; or
the first information is specifically used to instruct the user equipment in interaction with the second network node to determine, according to a sounding reference signal SRS or a demodulation reference signal DMRS, the second information, and the second information is specifically used to indicate that the to-be-identified cell is a cell in which the SRS or the DMRS sent by the user equipment is received; or
the first information is specifically used to instruct the user equipment in interaction with the second network node to determine, according to an identifier of a serving cell of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

18. User equipment, comprising:
a receiving unit, configured to receive an indication message sent by a first network node, wherein the indication message is used to instruct the user equipment to measure a reference signal RS or a synchronization signal SS that is sent by a second network node;
an acquiring unit, configured to measure the RS sent by the second network node, to obtain a cell identifier and a reference signal time difference RSTD, or measure, by the user equipment, the SS sent by the second network node, to obtain a cell identifier and the SSTD; and
a reporting unit, configured to report the cell identifier and the RSTD, or the cell identifier and the SSTD to the first network node, so that the first network node identifies, according to the RSTD or the SSTD, a to-be-identified cell from cells that use the cell identifier, wherein the to-be-identified cell is a cell of the second network node.

19. User equipment, comprising:
a sending unit, configured to send request information to a second network node, wherein the request information is used to request the second network node to send a cell global identifier CGI of a to-be-identified cell after the second network node receives the request information; and
a receiving unit, configured to receive the CGI, and send the CGI to the user equipment, so that the first network node identifies the to-be-identified cell according to the CGI received from the user equipment, wherein the to-be-identified cell is a cell of the second network node.

20. An apparatus assisting cell identification, comprising:
a receiving unit, configured to receive first information, wherein the first information is used to instruct user equipment and the apparatus interacts to determine second information, the second information is used to indicate a to-be-identified cell, and the to-be-identified cell is a cell of the second network node; and
a sending unit, configured to send the second information to a first network node to identify the to-be-identified cell.

21. The apparatus according to claim 20, wherein
the first information is specifically used to instruct the user equipment and the second network node interacts to determine, according to a user equipment identifier, the second information, and the second information is used to indicate that the to-be-identified cell is a cell in which the user equipment descrambles a physical downlink control channel PDCCH according to the user equipment identifier and to which the user equipment sends uplink data or a downlink data feedback; or
the first information is specifically used to instruct the user equipment and the second network node interacts to determine, according to a reference signal RS, the second information, and the second information is specifically used to indicate that the to-be-identified cell is a cell corresponding to the RS received by the user equipment, or that the to-be-identified cell is a cell corresponding to a reference signal time difference RSTD of the RS received by the user equipment; or
the first information is specifically used to instruct the user equipment and the second network node interacts to determine, according to a synchronization signal SS, the second information, and the second information is specifically used to indicate that the to-be-identified cell is a cell corresponding to the SS received by the user equipment, or the second information is specifically used to indicate that the to-be-identified cell is a cell corresponding to a synchronization signal time difference SSTD of the SS received by the user equipment; or
the first information is specifically used to instruct the user equipment and the second network node interacts to determine, according to a random access preamble Preamble sequence number and a physical random access channel PRACH mask sequence number, the second information, and the second information is specifically used to indicate that the to-be-identified cell is a cell in which a random access request that is sent by the user equipment according to the Preamble sequence number and the PRACH mask sequence number is received; or
the first information is specifically used to instruct the user equipment and the second network node interacts to determine, according to a sounding reference signal SRS or a demodulation reference signal DMRS, the second information, and the second information is specifically used to indicate that the to-be-identified cell is a cell in which the SRS or the DMRS sent by the user equipment is received; or
the first information is specifically used to instruct the user equipment and the second network node interacts to determine, according to an identifier of a serving cell of the user equipment and a user equipment identifier used by the user equipment in the serving cell, the second information, and the second information is specifically used to indicate that the to-be-identified cell is a cell in which the identifier of the serving cell of the user equipment and the user equipment identifier are received.

22. An apparatus assisting cell identification, comprising:
a receiving unit, configured to receive request information sent by user equipment or a first network node, wherein the request information is used to request the apparatus to send a cell global identifier CGI of a to-be-identified cell after the apparatus receives the request information; and
a sending unit, configured to send the CGI to the user equipment according to the request information, so that the first network node identifies the to-be-identified cell according to the CGI received from the user equipment.
